# EUROPEAN PATENT APPLICATION

(11) **EP 4 228 241 A1**
(43) Date of publication of application: **16.08.2023**
(21) Application number: 21884658.2
(22) Date of filing: 31.08.2021
(51) Int. Cl.: H04N 5/232

(54) **CAPTURING METHOD AND TERMINAL DEVICE**

(30) Priority: 30.10.2020 CN 202011187971
(71) Applicant: Huawei Technologies Co., Ltd., Shenzhen, Guangdong 518129 (CN)
(72) Inventor: ZHANG, Yanan, Shenzhen, Guangdong 518129 (CN)
(74) Representative: Pfenning, Meinig & Partner mbB
(86) International application number: PCT/CN2021/115543
(87) International publication number: WO 2022/088926

(57) **Abstract**

An image shooting method and a terminal device are provided. The method includes: A first terminal device obtains a to-be-shot image of a first camera of the first terminal device and a to-be-shot image of a second camera of a second terminal device. The first terminal device displays the to-be-shot image of the first camera in a first viewfinder frame on a display of the first terminal device, and displays the to-be-shot image of the second camera in a second viewfinder frame on the display of the first terminal device. The terminal device receives a shooting instruction of a user, and shoots an image in the first viewfinder frame and/or the second viewfinder frame based on the shooting instruction. In this method, to-be-shot images captured by cameras of different terminal devices are displayed on the display of the first terminal device by using different viewfinder frames. The first terminal device may flexibly control the cameras of the different terminal devices to shoot an image in each viewfinder frame, to improve shooting experience of the user.

## Description

### CROSS-REFERENCE TO RELATED APPLICATIONS

This application claims priority to Chinese Patent Application No. 202011187971.3, filed with the China National Intellectual Property Administration on October 30, 2020 and entitled "IMAGE SHOOTING METHOD AND TERMINAL DEVICE", which is incorporated herein by reference in its entirety.

### TECHNICAL FIELD

This application relates to the field of terminal technologies, and in particular, to an image shooting method and a terminal device.

### BACKGROUND

As quality of people's life is improved, a quantity of types of image shooting devices owned by each user increases. Although the user has more choices, there is still another shooting requirement due to different shooting manners of the user

When the user takes a selfie or takes a photo with a family member or friend, it is difficult for the user to control the image shooting device to perform image shooting, and a shooting angle and effect are usually limited by the single image shooting device of the user. Even when the user uses one or more other image shooting devices to photograph a panoramic person including the user or to perform image shooting at different angles, the user cannot flexibly control different image shooting devices to perform corresponding image shooting either.

### SUMMARY

This application provides an image shooting method and a terminal device, to flexibly control a plurality of terminal devices to perform image shooting.

According to a first aspect, an embodiment of the present invention provides an image shooting method, and the method is applicable to a first terminal device having an image shooting function. The first terminal device obtains a to-be-shot image captured by a first camera of the first terminal device and a to-be-shot image captured by a second camera of a second terminal device. The first terminal device displays, in a first viewfinder frame on a display of the first terminal device, the to-be-shot image captured by the first camera, and displays, in a second viewfinder frame on the display of the first terminal device, the to-be-shot image captured by the second camera. The first terminal device receives a shooting instruction of a user, and shoots images in the first viewfinder frame and the second viewfinder frame based on the shooting instruction.

According to this design, the first terminal device obtains the to-be-shot image captured by the first camera of the first terminal device and the to-be-shot image captured by the second camera of the second terminal device. The first terminal device displays, through the first viewfinder frame on the display of the first terminal device, the to-be-shot image captured by the first camera, and displays, through the second viewfinder frame on the display of the first terminal device, the to-be-shot image captured by the second camera. Further, the user may flexibly control, via the first terminal device, to shoot an image in each of viewfinder frames of cameras of different terminal devices, further to improve user's shooting experience.

In a possible design, before the first terminal device obtains the to-be-shot image captured by the first camera of the first terminal device and the to-be-shot image captured by the second camera of the second terminal device, the method further includes: The first terminal device receives a first operation of the user, and associates an identity ID number of the first terminal device with an identity ID number of the second terminal device; or the first terminal device receives a first operation of the user, and sets an identity ID number of the first terminal device to be the same as an identity ID number of the second terminal device.

According to this design, a connection is established between the first terminal device and the second terminal device, to ensure communication and interaction between the first terminal device and the second terminal device.

In a possible design, the first viewfinder frame and the second viewfinder frame are distributed in parallel on the display of the first terminal device; or the first viewfinder frame and the second viewfinder frame are distributed on different interfaces on the display of the first terminal device, and each interface is used to display one viewfinder frame in full screen; or the first viewfinder frame hovers and is superimposed on the second viewfinder frame; or the first viewfinder frame hovers and is superimposed under the second viewfinder frame.

According to this design, a manner of displaying the first viewfinder frame and the second viewfinder frame on the display of the first terminal device includes but is not limited to the foregoing four forms, and different display forms may be flexibly switched according to an actual operation of the user. In addition, the first viewfinder frame and the second viewfinder frame may be displayed in a form of hovering and superimposing, so that the user can better control and shoot an image in each viewfinder frame via the first terminal device, to improve user experience.

In a possible design, that the first terminal device receives a shooting instruction of a user, and shoots images in the first viewfinder frame and the second viewfinder frame based on the shooting instruction includes: The first terminal device receives a first shooting instruction of the user, and shoots an image in the first viewfinder frame by using the first camera based on the first shooting instruction; and/or the first terminal device receives a second shooting instruction of the user, and sends a shooting control instruction to the second terminal device based on the second shooting instruction, where the shooting control instruction indicates the second camera to shoot an image in the second viewfinder frame.

According to this design, the first terminal device receives a specific shooting instruction of the user, and shoots an image in a corresponding viewfinder frame by using a camera of the terminal device indicated by the shooting instruction, to flexibly control and shoot images in different viewfinder frames, further to improve user's experience.

In a possible design, an adjustment function used for the to-be-shot image of the second camera in the second viewfinder frame is the same as an adjustment function used for the to-be-shot image that is of the second camera and that is displayed on a display of the second terminal device. The adjustment function includes any one or a combination of the following: a filter function, an effect function, a facial beautification function, and a wide-angle shooting function.

According to this design, when the user adjusts the to-be-shot image in the second viewfinder frame by using the adjustment function of the first terminal device, the to-be-shot image displayed on the display of the second terminal device is also adjusted by using a same adjustment function. Therefore, the image in the second viewfinder frame on the display of the first terminal device is consistent with the image displayed on the display of the second terminal device, further to improve an effect in which the first terminal device controls the second terminal device to perform image shooting. The adjustment function includes but is not limited to several of the foregoing designs. The user may adjust, according to a requirement of the user, a to-be-shot image displayed on a display of a terminal device by using different adjustment functions. This design can improve user experience.

According to a second aspect, an embodiment of the present invention provides an image shooting method, and the method is applicable to a first terminal device that does not have an image shooting function. The first terminal device separately obtains a to-be-shot image captured by a second camera of at least one second terminal device.

The first terminal device separately displays, in at least one viewfinder frame on a display of the first terminal device, the to-be-shot image captured by the second camera of the at least one second terminal device, where different to-be-shot images are displayed in different viewfinder frames. The first terminal device receives a shooting instruction of a user, and shoots, based on the shooting instruction, a to-be-shot image in at least one of the different viewfinder frames.

According to this design, the first terminal device obtains the to-be-shot image captured by the camera of the at least one second terminal device, and displays to-be-shot images captured by second cameras of different second terminal devices in different viewfinder frames on the display of the first terminal device. Further, the user may browse, through the viewfinder frame on the display of the first terminal device, the to-be-shot image captured by the camera of the at least one second terminal device, to flexibly control cameras of different second terminal devices to shoot the image in each viewfinder frame, further to improve shooting experience of the user.

In a possible design, before the first terminal device separately obtains the to-be-shot image captured by the second camera of the at least one second terminal device, the method further includes: The first terminal device receives a first operation of the user, and associates an identity ID number of the first terminal device with an identity ID number of the at least one second terminal device; or the first terminal device receives a first operation of the user, and sets an identity ID number of the first terminal device to be the same as an identity ID number of the at least one second terminal device.

According to this design, a connection is established between the first terminal device and the at least one second terminal device, to ensure communication and interaction between the first terminal device and the at least one second terminal device.

In a possible design, the different viewfinder frames are distributed on a display interface on the display of the first terminal device; or the different viewfinder frames are distributed on different interfaces on the display of the first terminal device, and each interface is used to display one viewfinder frame in full screen; or any one of the different viewfinder frames is displayed in full screen on the display of the first terminal device, and another viewfinder frame other than the viewfinder frame displayed in full screen in the different viewfinder frames hovers and is superimposed on the viewfinder frame displayed in full screen.

According to this design, a manner of displaying on the display includes but is not limited to the foregoing three forms, and different display forms may be flexibly switched according to an actual operation of the user. In addition, viewfinder frames may be displayed in a form of hovering and superimposing, so that a to-be-shot image is captured by a camera of the second terminal device. The to-be-shot image may be flexibly displayed on the display of the first terminal device by using a viewfinder frame, and it is also convenient for a user to control and shoot an image in each viewfinder frame via the first terminal device, to improve user experience.

In a possible design, that the first terminal device receives a shooting instruction of a user, and shoots, based on the shooting instruction, a to-be-shot image in at least one of the different viewfinder frames includes: The first terminal device receives the shooting instruction of the user, and shoots, based on the shooting instruction by the first terminal device, the to-be-shot images in the at least one of the different viewfinder frames; and/or receives, by the first terminal device, the shooting instruction of the user, and sends, based on the shooting instruction, a shooting control instruction to a second terminal device respectively corresponding to the at least one viewfinder frame, where the shooting control instruction indicates the second terminal device respectively corresponding to the at least one viewfinder frame to shoot a to-be-shot image in the at least one second viewfinder frame.

According to this design, the first terminal device receives a specific shooting instruction of the user, and shoots n image in a corresponding viewfinder frame as indicated by the shooting instruction, or shoots an image in a corresponding viewfinder frame by using the camera of the second terminal device. In this way, images in different viewfinder frames can be flexibly controlled and shot, and user experience can be improved.

In a possible design, an adjustment function used for to-be-shot images in the different viewfinder frames is the same as an adjustment function used for to-be-shot images displayed on displays of corresponding second terminal devices. The adjustment function includes any one or a combination of the following: a filter function, an effect function, a facial beautification function, and a wide-angle shooting function.

According to this design, when the user adjusts a to-be-shot image in at least one viewfinder frame by using the adjustment function of the first terminal device, the to-be-shot image displayed on the display of the second terminal device is also adjusted by using a same adjustment function. Therefore, the image adjustment function in the viewfinder frame on the display of the first terminal device may be applied to the display of the second terminal device to display an image, further to improve an effect in which the first terminal device controls the second terminal device to perform image shooting. The adjustment function includes but is not limited to several of the foregoing designs. The user may adjust, according to a requirement of the user, a to-be-shot image by using different adjustment functions. This design can improve user experience.

According to a third aspect, an embodiment of the present invention provides an image shooting method, and the method is applicable to a second terminal device having an image shooting function. The second terminal device sends a to-be-shot image captured by a camera of the second terminal device to a first terminal device, so that the to-be-shot image is displayed in a viewfinder frame on a display of the first terminal device. The second terminal device receives a shooting control instruction sent by the first terminal device, and shoots, based on the shooting control instruction by using the camera of the second terminal device, a to-be-shot image that is currently captured.

According to this design, the second terminal device sends, to the first terminal device, the to-be-shot image captured by the camera of the second terminal device, and then performs image shooting by receiving the shooting control instruction sent by the first terminal device. In this design, when the user cannot directly control the second terminal device to perform image shooting, the second terminal device may be controlled to perform image shooting via the first terminal device.

In a possible design, before the second terminal device sends the to-be-shot image captured by the camera of the second terminal device to the first terminal device, the method further includes: The second terminal device is connected to the first terminal device. That the second terminal device is connected to the first terminal device includes: The second terminal device associates an identity ID number of the second terminal device with an identity ID number of the first terminal device; or sets an identity ID number of the second terminal device to be the same as an identity ID number of the first terminal device.

According to this design, a connection is established between the first terminal device and the second terminal device, to ensure communication and interaction between the first terminal device and the second terminal device.

According to a fourth aspect, an embodiment of this application provides a first terminal device. The first terminal device includes a first camera, a display, a memory, a processor, and a transceiver. The camera is configured to capture a to-be-shot image. The transceiver is configured to obtain a to-be-shot image captured by a second camera of a second terminal device. The display is configured to display an interface. The memory stores one or more computer programs, and when the one or more computer programs are executed by the processor, the first terminal device can implement the method in the first aspect or any one of the possible designs of the first aspect.

According to a fifth aspect, an embodiment of this application provides a first terminal device. The first terminal device includes a display, a memory, a processor, and a transceiver. The display is configured to display an interface. The transceiver is configured to obtain a to-be-shot image captured by a second camera of at least one second terminal device. The memory stores one or more computer programs, and when the one or more computer programs are executed by the processor, the first terminal device can implement the method according to the second aspect or any one of the possible designs of the second aspect.

According to a sixth aspect, an embodiment of this application provides a second terminal device. The second terminal device includes a camera, a display, a memory, a processor, and a transceiver. The camera is configured to capture a to-be-shot image. The display displays the to-be-shot image captured by the camera. The transceiver is configured to send the to-be-shot image captured by the camera to a first terminal device for display. The memory is configured to store one or more computer programs, and when the one or more computer programs are executed by the processor, the second terminal device can implement the method according to the third aspect or any one of the possible designs of the third aspect.

According to a seventh aspect, an embodiment of this application further provides a terminal device. The terminal device includes modules/units for performing the method in the first aspect or any possible design of the first aspect; or the terminal device includes modules/units for performing the method in the second aspect or any possible design of the second aspect; or the terminal device includes modules/units for performing the method in the third aspect or any possible design of the third aspect. These modules/units may be implemented by hardware, or may be implemented by hardware executing corresponding software.

According to an eighth aspect, an embodiment of this application further provides a computer storage medium. The storage medium stores a software program. When the software program is read and executed by one or more processors, the software program can implement the method provided in the first aspect or any design of the first aspect, or implement the method provided in the second aspect or any design of the second aspect, or implement the method provided in the third aspect or any design of the third aspect.

According to a ninth aspect, an embodiment of this application further provides a computer program product including instructions. When the instructions run on a computer, the computer is enabled to perform the method provided in the first aspect or any design of the first aspect, or perform the method provided in the second aspect or any design of the second aspect, or implement the method provided in the third aspect or any design of the third aspect.

According to a tenth aspect, an embodiment of this application provides a chip system. The chip system includes a processor, configured to support a terminal device in implementing the function in the first aspect, or support a terminal device in implementing the function in the second aspect, or implement the method provided in the third aspect or any design of the third aspect.

In a possible design, the chip system further includes a memory. The memory is configured to store program instructions and data that are necessary for the terminal device. The chip system may include a chip, or may include a chip and another discrete component.

According to an eleventh aspect, an embodiment of this application further provides an interface on a terminal device. The terminal device has a display, a memory, and a processor, and the processor is configured to execute a computer program stored in the memory. The interface includes an interface displayed when the terminal device performs the method according to the first aspect or the third aspect.

For technical effects that can be achieved in the fourth aspect to the eleventh aspect, refer to descriptions of technical effects that can be achieved by any design in the first aspect to the third aspect. Details are not described herein again.

### BRIEF DESCRIPTION OF DRAWINGS

FIG. 1 is a schematic diagram of a hardware structure of a terminal device according to an embodiment of the present invention;
FIG. 2 is a schematic diagram of an application scenario to which an image shooting method is applicable according to an embodiment of the present invention;
FIG. 3A is a schematic flowchart of an image shooting method according to an embodiment of the present invention;
FIG. 3B is another schematic flowchart of an image shooting method according to an embodiment of the present invention;
FIG. 4A is a schematic diagram of a device of a smartwatch according to an embodiment of the present invention;
FIG. 4B is a schematic diagram of controlling image shooting by a smartwatch according to an embodiment of the present invention;
FIG. 4C is a schematic diagram of controlling image shooting by a smartwatch according to an embodiment of the present invention;
FIG. 4D(0) to FIG. 4D(4) are a schematic diagram of controlling image shooting by a smartphone according to an embodiment of the present invention;
FIG. 4E(1) to FIG. 4E(4) are a schematic diagram of controlling image shooting by a smartphone according to an embodiment of the present invention;
FIG. 4F is a schematic diagram of controlling image shooting by a smartphone according to an embodiment of the present invention;
FIG. 4G is a schematic diagram of controlling image shooting by a smartphone according to an embodiment of the present invention;
FIG. 4H is a schematic diagram of controlling image shooting by a smartphone according to an embodiment of the present invention;
FIG. 41 is a schematic diagram of controlling image shooting by a smartphone according to an embodiment of the present invention;

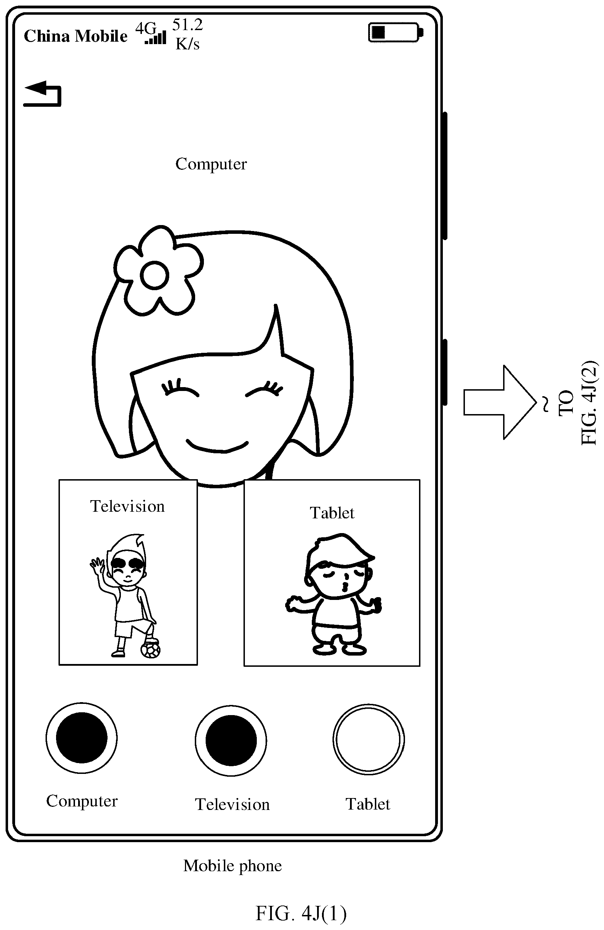

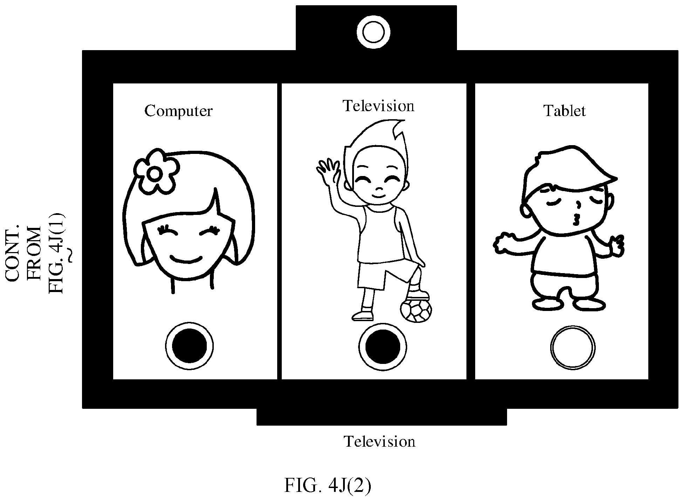

FIG. 4J(1) and FIG. 4J(2) are a schematic diagram in which a smartphone controls a large-screen to perform image shooting according to an embodiment of the present invention;

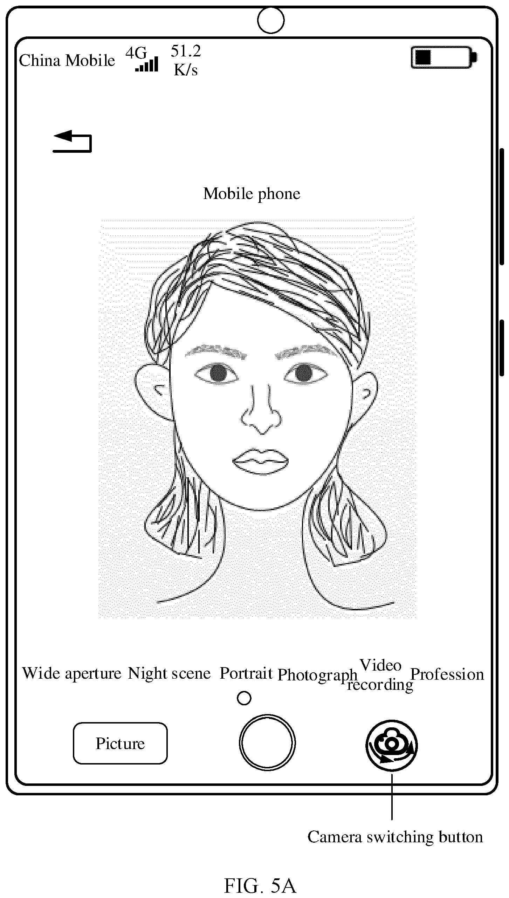

FIG. 5A is a schematic diagram of an adaptation function of a smartphone according to an embodiment of the present invention;

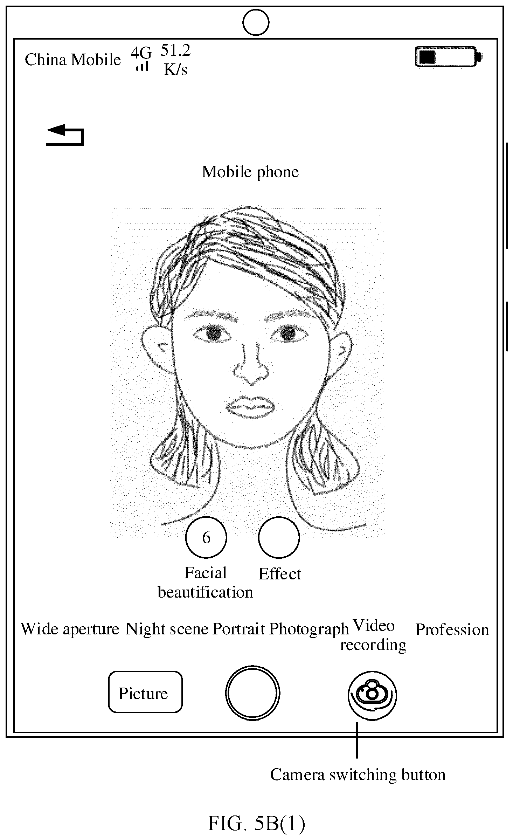

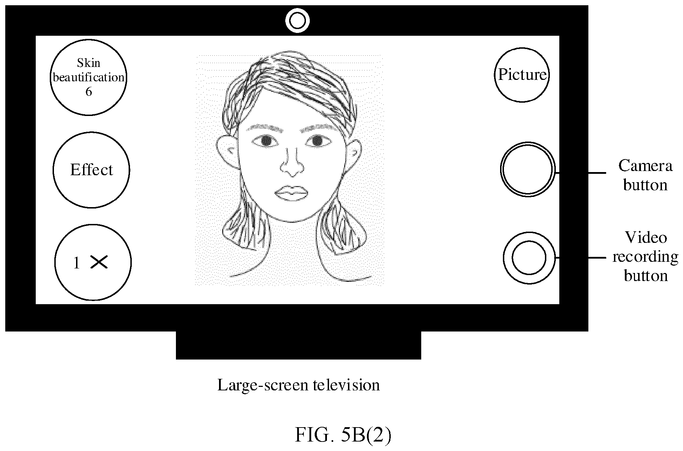

FIG. 5B(1) and FIG. 5B(2) are a schematic diagram in which a smartphone controls a large-screen television to display an adaptation function according to an embodiment of the present invention;

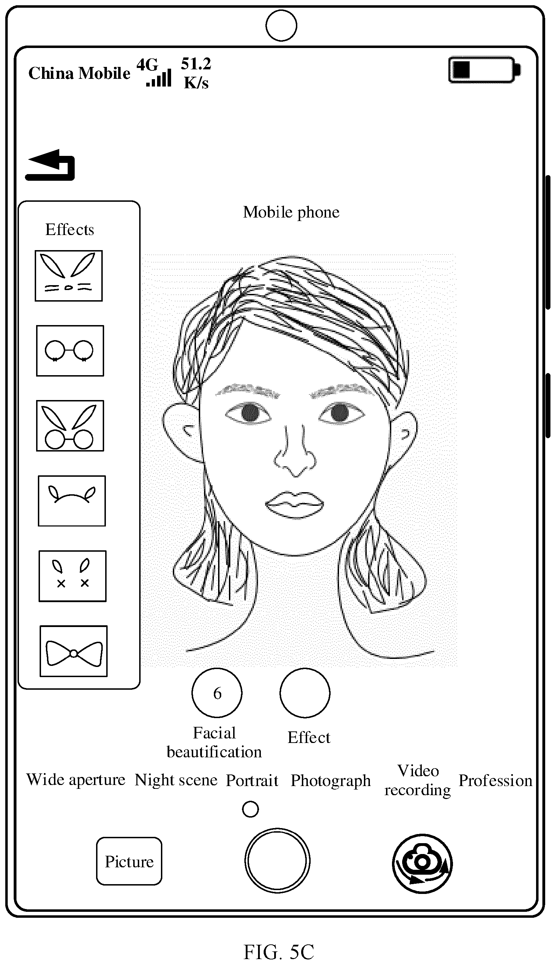

FIG. 5C is a schematic diagram of display effect of a display of a smartphone according to an embodiment of the present invention;

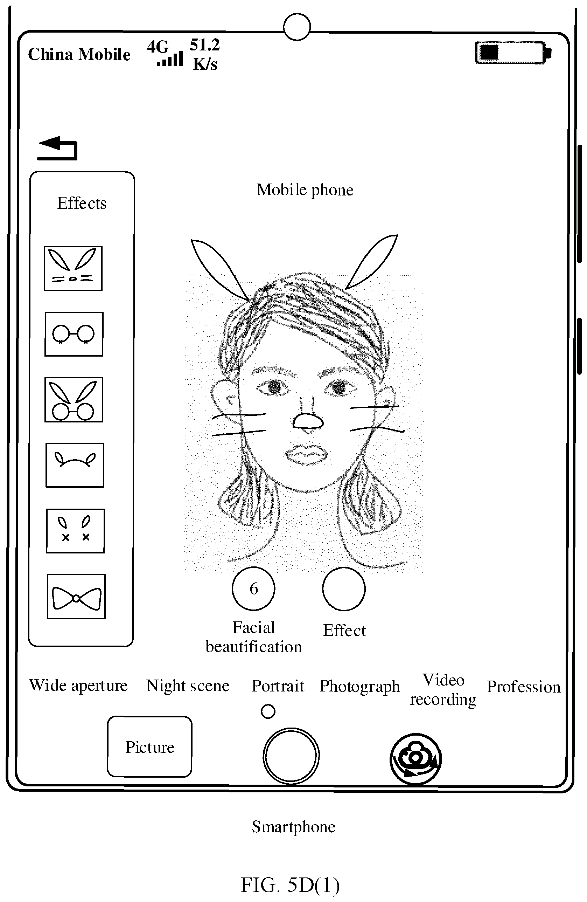

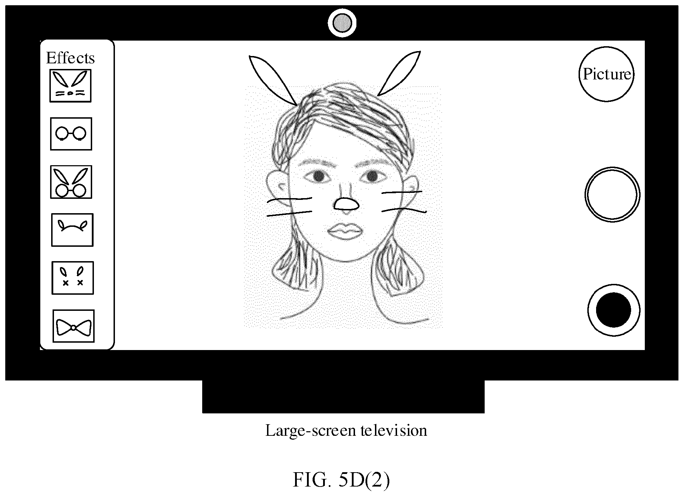

FIG. 5D(1) and FIG. 5D(2) are a schematic diagram of display effect of a display projected to a large-screen television according to an embodiment of the present invention;

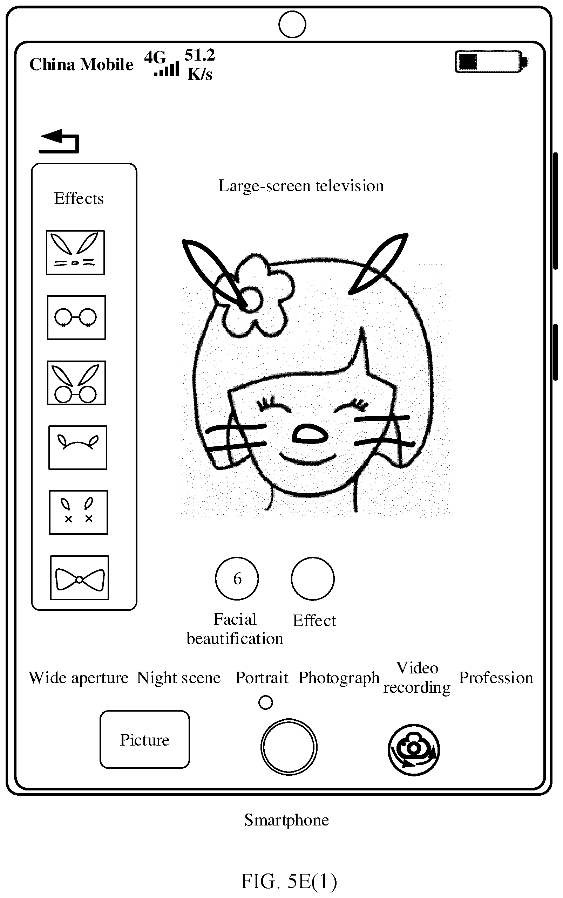

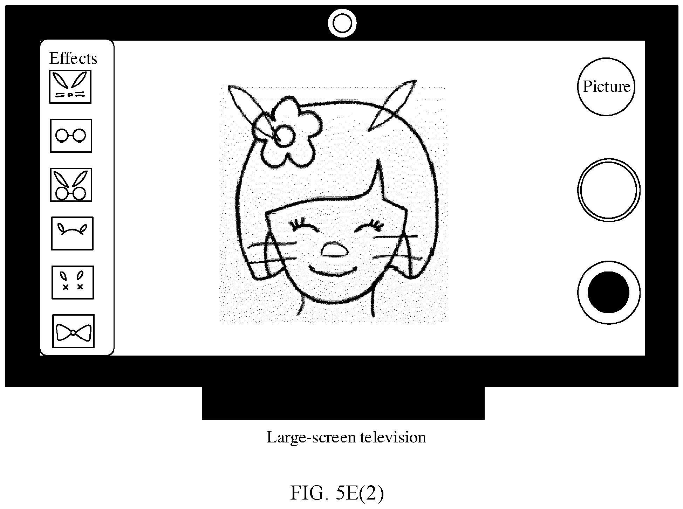

FIG. 5E(1) and FIG. 5E(2) are a schematic diagram in which a smartphone controls display effect of a large-screen television according to an embodiment of the present invention;

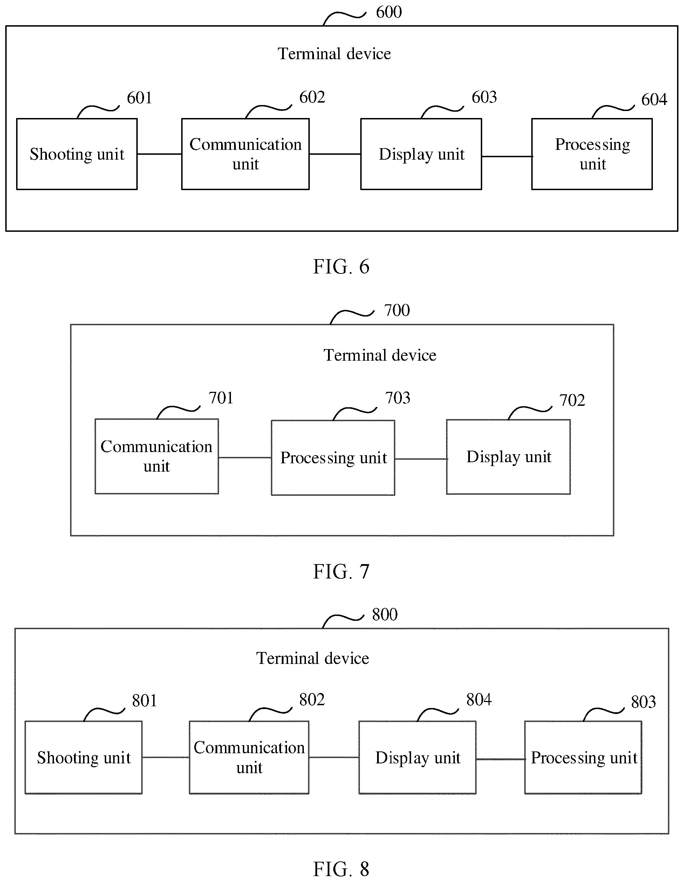

FIG. 6 is a schematic apparatus diagram of a terminal device according to an embodiment of the present invention;
FIG. 7 is a schematic apparatus diagram of a terminal device according to an embodiment of the present invention;
FIG. 8 is a schematic apparatus diagram of a terminal device according to an embodiment of the present invention;

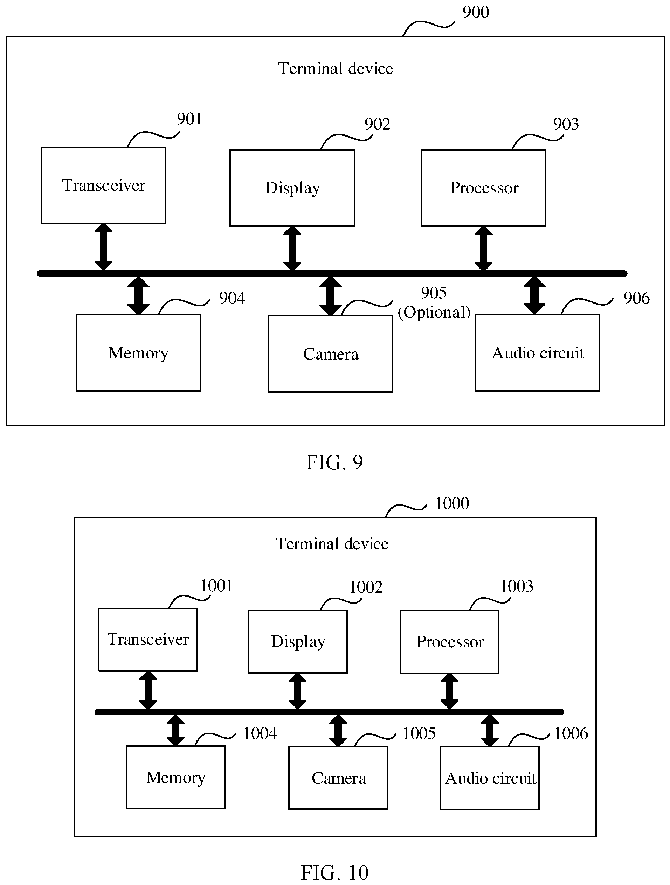

FIG. 9 is a schematic diagram of a structure of a terminal device according to an embodiment of the present invention; and
FIG. 10 is a schematic diagram of a structure of a terminal device according to an embodiment of the present invention.

### DESCRIPTION OF EMBODIMENTS

The following describes the technical solutions in embodiments of this application with reference to the accompanying drawings in embodiments of this application.

The following describes some terms in embodiments of this application, to facilitate understanding of a person skilled in the art.
(1) A terminal device in embodiments of this application may also be referred to as user equipment (user equipment, UE), for example, a smartphone, a tablet, various wearable devices, or a vehicle-mounted device. Various applications (applications, apps for short) may be installed in the terminal device, such as, WeChat, Alipay, Tencent chat software (QQ), DingTalk, photo sharing (Instagram), KakaoTalk, and LINE (LINE).
(2) A viewfinder frame in embodiments of this application is an interface with a relatively small field of view compared with a full-screen field of view, and a to-be-shot image is displayed by using the interface with a relatively small field of view. A shape of the viewfinder frame may include but is not limited to a square, a rectangle, or a circle. A display scale of the viewfinder frame on a display of the terminal device may be set according to a specific scale or flexibly changed with an operation of a user. However, the display scale of the viewfinder frame is always less than or equal to the size of the display of the terminal device. In addition, the viewfinder frame may move in any direction on the display of the terminal device along with dragging of a finger of the user.
(3) "A plurality of" in embodiments of this application indicates "two or more".

In addition, it should be understood that in description of this application, terms such as "first" and "second" are merely used for distinguishing and description, but should not be understood as indicating or implying relative importance, or should not be understood as indicating or implying a sequence.

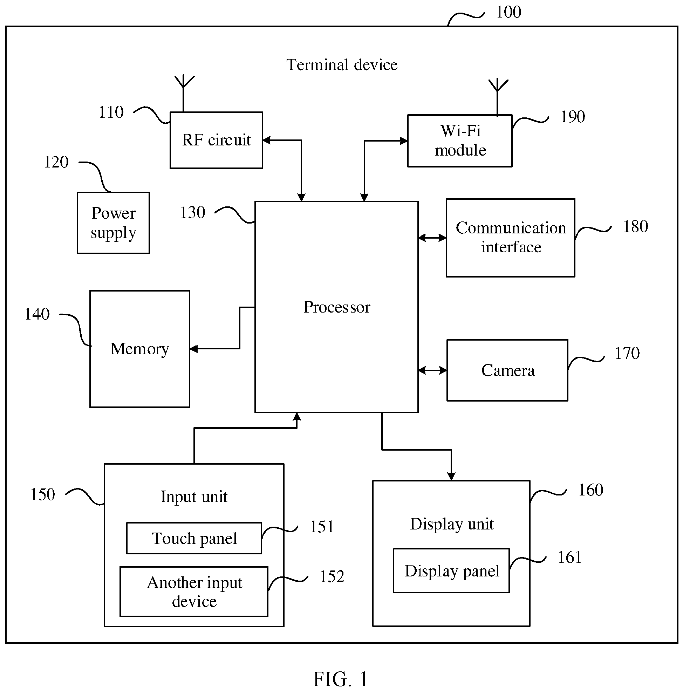

Embodiments of this application provide an image shooting method, and the method is applicable to a terminal device. FIG. 1 is a possible structural diagram of a terminal device. As shown in FIG. 1, the terminal device 100 includes components such as a radio frequency (radio frequency, RF) circuit 110, a power supply 120, a processor 130, a memory 140, an input unit 150, a display unit 160, a camera 170, a communication interface 180, and wireless fidelity (wireless fidelity, Wi-Fi) module 190. A person skilled in the art may understand that a structure of the terminal device shown in FIG. 1 does not constitute a limitation on the terminal device. The terminal device provided in this embodiment of this application may include more or fewer components than those shown in the figure, some components may be combined, or a different component deployment may be used.

The components of the terminal device 100 are specifically described below with reference to FIG. 1.

The RF circuit 110 may be configured to receive and send data in a communication or call process. Specifically, after receiving downlink data from a base station, the RF circuit 110 sends the downlink data to the processor 130 for processing, and sends to-be-sent uplink data to the base station. The RF circuit 110 usually includes but is not limited to an antenna, at least one amplifier, a transceiver, a coupler, a low noise amplifier (low noise amplifier, LNA), a duplexer, and the like.

In addition, the RF circuit 110 may further communicate with a network and another device through wireless communication. The wireless communication may use any communication standard or protocol, including but not limited to a global system for mobile communications (global system for mobile communications, GSM), a general packet radio service (general packet radio service, GPRS), code division multiple access (code division multiple access, CDMA), wideband code division multiple access (wideband code division multiple access, WCDMA), long term evolution (long term evolution, LTE), an email, a short message service (short message service, SMS), and the like.

A Wi-Fi technology belongs to a short-range wireless transmission technology. The terminal device 100 may connect to an access point (access point, AP) by using the Wi-Fi module 190, to access a data network. The Wi-Fi module 190 may be configured to receive and send data in a communication process.

The terminal device 100 may be physically connected to another device by using the communication interface 180. Optionally, the communication interface 180 is connected to a communication interface of the another device through a cable, to implement data transmission between the terminal device 100 and the another device.

In this embodiment of this application, the terminal device 100 can implement a communication service and send information to another terminal device. Therefore, the terminal device 100 needs to have a data transmission function. In other words, a communication module needs to be included inside the terminal device 100. Although FIG. 1 shows communication modules such as the RF circuit 110, the Wi-Fi module 190, and the communication interface 180, it may be understood that the terminal device 100 includes at least one of the foregoing components or another communication module (for example, a Bluetooth module) configured to implement communication, to perform data transmission.

For example, when the terminal device 100 is a mobile phone, the terminal device 100 may include the RF circuit 110, and may further include the Wi-Fi module 190. When the terminal device 100 is a computer, the terminal device 100 may include the communication interface 180, and may further include the Wi-Fi module 190. When the terminal device 100 is a tablet, the terminal device 100 may include the Wi-Fi module.

The memory 140 may be configured to store a software program and a module. The processor 130 executes various function applications of the terminal device 100 and processes data by running the software program and the module that are stored in the memory 140.

Optionally, the memory 140 may mainly include a program storage area and a data storage area. The program storage area may store an operating system, various application programs, and the like. The data storage area may store a multimedia file such as an image or a video.

In addition, the memory 140 may include a high-speed random access memory, and may further include a non-volatile memory, for example, at least one magnetic disk storage device, a flash memory, or another volatile solid-state storage device.

The input unit 150 may be configured to receive digit or character information entered by a user, and generate a keyboard signal input related to user settings and function control of the terminal device 100.

Optionally, the input unit 150 may include a touch panel 151 and another input device 152.

The touch panel 151, which is also referred to as a touchscreen, may collect a touch operation of a user on or near the touch panel 151 (for example, an operation of the user on or near the touch panel 151 by using any suitable object or accessory such as a finger or a stylus), and drive a corresponding connection apparatus based on a preset program. Optionally, the touch panel 151 may include two parts: a touch detection apparatus and a touch controller. The touch detection apparatus detects a location touched by the user, detects a signal brought by a touch operation, and transmits the signal to the touch controller. The touch controller receives touch information from the touch detection apparatus, converts the touch information into touch point coordinates, and sends the touch point coordinates to the processor 130, and can receive and execute a command sent by the processor 130. In addition, the touch panel 151 may be implemented in a plurality of types, such as a resistive type, a capacitive type, an infrared type, and a surface acoustic wave type.

Optionally, the another input device 152 may include but is not limited to one or more of a physical keyboard, a function key (for example, a volume control button or a power button), a trackball, a mouse, a joystick, and the like.

The display unit 160 may be configured to display information entered by a user or information provided for a user, and various menus of the terminal device 100. The display unit 160 is a display system of the terminal device 100, and is configured to present an interface and implement human-machine interaction.

The display unit 160 may include a display panel 161. Optionally, the display panel 161 may be configured in a form such as a liquid crystal display (liquid crystal display, LCD) or an organic light-emitting diode (organic light-emitting diode, OLED).

Further, the touch panel 151 may cover the display panel 161. After detecting a touch operation on or near the touch panel 151, the touch panel 151 transmits information about the touch operation to the processor 130 to determine a touch event type. Then the processor 130 provides corresponding visual output on the display panel 161 based on the touch event type.

Although in FIG. 1, the touch panel 151 and the display panel 161 serve as two independent components to implement input and output functions of the terminal device 100. However, in some embodiments, the touch panel 151 may be integrated into the display panel 161 to implement the input and output functions of the terminal device 100.

The processor 130 is a control center of the terminal device 100 and is connected to the components by using various interfaces and lines. The processor 130 runs or executes the software program and/or module stored in the memory 140, and invokes the data stored in the memory 140, to perform various functions of the terminal device 100 and process data, to implement a plurality of services based on the terminal device.

Optionally, the processor 130 may include one or more processing units. Optionally, the processor 130 may integrate an application processor and a modem processor, where the application processor mainly processes an operating system, a user interface, an application program, and the like, and the modem processor mainly processes wireless communication. It may be understood that the modem processor may alternatively not be integrated into the processor 130.

The camera 170 is configured to implement a shooting function of the terminal device 100, to shoot an image or shoot a video. The camera 170 may further be configured to: implement a scanning function of the terminal device 100, and scan a to-be-scanned object (a two-dimensional code/bar code).

The terminal device 100 further includes the power supply 120 (for example, a battery) configured to supply power to each component. Optionally, the power supply 120 may be logically connected to the processor 130 by using a power supply management system, to implement functions such as charging, discharging, and power consumption management by using the power supply management system.

Although not shown, the terminal device 100 may further include at least one sensor, an audio circuit, and the like. Details are not described herein.

It should be noted that embodiments of this application involve two types of terminal devices, namely, a first terminal device and a second terminal device. The first terminal device is a device that includes a display and is easily portable, for example, a smartphone or a smartwatch. The second terminal device is a device with an image shooting function, and may also include a display, for example, a laptop computer, a smartphone, an iPad (tablet), a camera, or a smart screen. A connection may be established between the first terminal device and the second terminal device through identity (Identity, ID) binding or ID association. After starting a shooting control function, the first terminal device displays a preview screen, where first image information of the second terminal device is displayed in the preview screen, and the first image information includes display content currently displayed on a display of the second terminal device. According to the technical solution provided in embodiments of this application, if a user needs to control, via the first terminal device, the second terminal device to perform image shooting (A display of the first terminal device may further display an image shot by a camera of the second terminal device.), even when a plurality of second terminal devices are used, the first terminal device may be used to shoot the image captured by the cameras of the second terminal devices without considering a problem that a shooting angle controlled by the first terminal device and content displayed on the display of the first terminal device is blocked.

In addition, in this embodiment of this application, the first terminal device is used as a device to control image shooting, and the second terminal device is used as a device controlled to perform image shooting. There may be one or more second terminal devices. This is not specifically limited in this application.

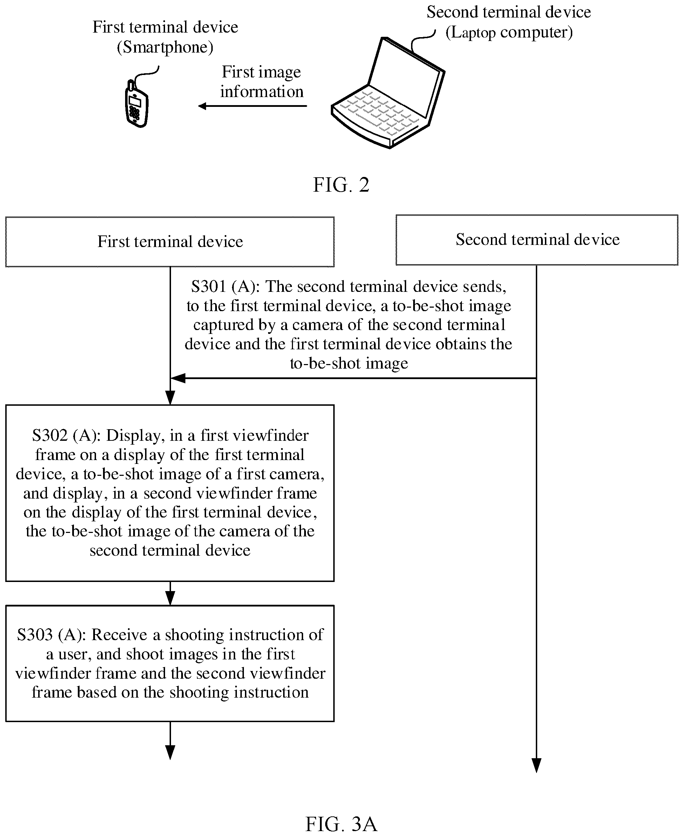

Before the image shooting method in embodiments of this application is described, an application scenario to which embodiments of this application are applicable is first described. For example, FIG. 2 is a schematic diagram of an application scenario according to an embodiment of this application. In FIG. 2, an example in which a first terminal device is a smartphone and a second terminal device is a laptop computer is used. In this application scenario, a connection is established between the smartphone and the laptop computer. After the smartphone starts an image shooting function, the smartphone displays a preview image. The preview image includes an image captured by a camera of the smartphone and first image information sent by the laptop computer, and the first image information includes content that is currently displayed on a display of the laptop computer. The displayed content is an image currently captured by a camera of the laptop computer. A user may perform an operation on a display of the smartphone to control the camera of the laptop computer to shoot images captured by the camera of the laptop computer.

However, shooting requirements increase with image shooting devices owned by the user. Based on the foregoing application scenario, the smartphone controls one second terminal device (for example, the laptop computer) to perform image shooting. However, in a scenario in which a plurality of terminal devices simultaneously perform image shooting, the smartphone cannot flexibly control cameras of the plurality of terminal devices to perform image shooting.

Therefore, embodiments of this application provide an image shooting method and a terminal device. In the method, the first terminal device obtains a to-be-shot image of a first camera of the first terminal device and/or a to-be-shot image of a second camera of the second terminal device. The first terminal device displays the to-be-shot image of the first camera in a first viewfinder frame on a display of the first terminal device, and/or displays the to-be-shot image of the second camera in a second viewfinder frame on a display of the first terminal device. The terminal device receives a shooting instruction of the user, and shoots, based on the shooting instruction, images in viewfinder frames corresponding to different terminal devices. In this method, to-be-shot images captured by cameras of different terminal devices are displayed on the display of the first terminal device in different viewfinder frames. The first terminal device may flexibly control the cameras of different terminal devices to shoot images in the viewfinder frames, to improve shooting experience of the user.

Refer to FIG. 3A. FIG. 3A is a schematic flowchart of an image shooting method according to an embodiment of this application. Two terminal devices in this embodiment of this application are applicable to the terminal device 100 shown in FIG. 1. As shown in FIG. 3A, a procedure of the method includes the following steps.

It should be noted that in the embodiment in FIG. 3A, a first terminal device includes a camera and has a shooting function.

S301 (A): A second terminal device sends, to the first terminal device, a to-be-shot image captured by a camera of the second terminal device, and the first terminal device obtains the to-be-shot image captured by the second camera of the second terminal device.

In an implementation, before the first terminal device communicates and interacts with the second terminal device (for example, before the second terminal device sends, to the first terminal device, the to-be-shot image captured by the camera of the second terminal device, or before the first terminal device obtains a to-be-shot image captured by a first camera of the first terminal device and the to-be-shot image captured by the second camera of the second terminal device), the first terminal device receives a first operation of a user, and connects to the second terminal device.

When the first terminal device receives the first operation of the user, and connects to the second terminal device, a connection manner may include but is not limited to the following two manners.

Manner 1: The first terminal device receives the first operation of the user, and associates an identity ID number of the first terminal device with an identity ID number of the second terminal device.

Manner 2: The first terminal device receives the first operation of the user, and sets an identity ID number of the first terminal device to be the same as an identity ID number of the second terminal device.

The ID number represents an identity number of a terminal device, and is different from an identifier of the terminal device. The ID number is a pass for the terminal device to access an internet, and may be determined according to a rule formulated by the user.

In an implementation, before the second terminal device sends the to-be-shot image of the camera of the second terminal device to the first terminal device, the second terminal device turns on the camera of the second terminal device to perform image shooting, and displays the to-be-shot image of the camera of the second terminal device on a display of the second terminal device.

In an implementation, when the first terminal device obtains the to-be-shot image captured by the second camera of the second terminal device, the method further includes: obtaining the to-be-shot image captured by the first camera of the first terminal device.

That the first terminal device obtains the to-be-shot image captured by the first camera of the first terminal device includes: The first terminal device starts a smart shooting assistant function, turns on the camera of the first terminal device to perform image shooting, and displays the to-be-shot image of the camera of the first terminal device on a display of the first terminal device.

In an implementation, the first terminal device may obtain the to-be-shot image of the first camera of the first terminal device by using but not limited to a wireless transmission technology or a high-speed bus interface.

S302 (A): The first terminal device displays the to-be-shot image of the first camera in a first viewfinder frame on the display of the first terminal device, and displays the to-be-shot image of the second camera in a second viewfinder frame on the display of the first terminal device.

In an implementation, the first terminal device displays, in the first viewfinder frame on the display of the first terminal device, the to-be-shot image captured by the first camera in real time, and displays, in the second viewfinder frame on the display of the first terminal device, the to-be-shot image captured by the second camera in real time.

Specifically, when the first viewfinder frame and the second viewfinder frame are displayed on the display of the first terminal device, display forms include but are not limited to the following several display forms.

A first display form: The first viewfinder frame and the second viewfinder frame are distributed in parallel on the display of the first terminal device.

A second display form: The first viewfinder frame and the second viewfinder frame are distributed on different interfaces on the display of the first terminal device, and each interface is used to display one viewfinder frame in full screen.

A third display form: The first viewfinder frame hovers and is superimposed on the second viewfinder frame.

A fourth display form: The first viewfinder frame hovers and is superimposed under the second viewfinder frame.

It should be noted that distributing in parallel in the first display form may be vertical, or may be horizontal. This is not specifically limited in this application. When the first viewfinder frame and the second viewfinder frame are displayed in a hovering and superimposing manner on the display of the first terminal device, the user may perform an operation on the display with a finger to switch between the third display form and the fourth display form.

S303 (A): The first terminal device receives a shooting instruction of the user, and shoots images in the first viewfinder frame and the second viewfinder frame based on the shooting instruction.

In an implementation, that the first terminal device receives a shooting instruction of the user, and shoots images in the first viewfinder frame and the second viewfinder frame based on the shooting instruction includes:
the first terminal device receives a first shooting instruction of the user, and shoots an image in the first viewfinder frame by using the first camera based on the first shooting instruction; and/or
the first terminal device receives a second shooting instruction of the user, and sends a shooting control instruction to the second terminal device based on the second shooting instruction, where the shooting control instruction indicates the second camera to shoot an image in the second viewfinder frame; the second terminal device receives the shooting control instruction sent by the first terminal device, and shoots, based on the shooting control instruction by using the camera of the second terminal device, a to-be-shot image that is currently captured.

Optionally, when the image shot by the camera of the second terminal device is displayed on the display of the first terminal device in the first viewfinder frame, the image shot by the camera of the second terminal device may also be displayed on the display of the second terminal device.

In an implementation, an adjustment function used for the to-be-shot image of the second camera in the second viewfinder frame is the same as an adjustment function used for the to-be-shot image that is of the second camera and that is displayed on the display of the second terminal device. The adjustment function includes any one or a combination of the following: a filter function, an effect function, a facial beautification function, and a wide-angle shooting function.

For example, if the first terminal device determines to add a filter to the shot image of the second camera in the second viewfinder frame by using the filter function, to be specific, after receiving a selection operation of the user, the first terminal device determines to use a light blue filter, the light blue filter is added to the image in the second viewfinder frame on the display of the first terminal device, and the light blue filter is also added to the image displayed on the display of the second terminal device.

If the first terminal device determines to use the facial beautification function to beautify a photographed person of the second camera in the second viewfinder frame, to be specific, after receiving a selection operation of the user, the first terminal device performs face slimming on a person displayed in the second viewfinder frame on the display of the first terminal device, and face slimming with the same effect is also performed on a person displayed on the display of the second terminal device.

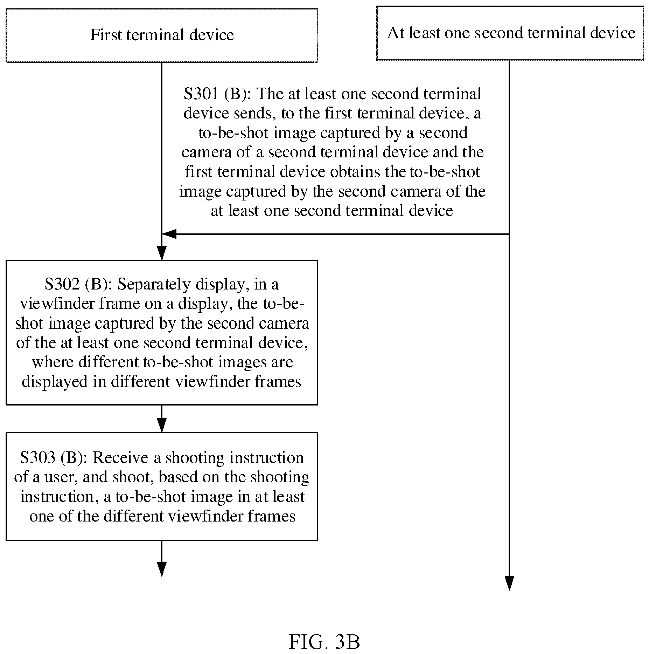

Refer to FIG. 3B. FIG. 3B is a schematic flowchart of an image shooting method according to an embodiment of this application. A second terminal device in this embodiment of this application is applicable to the terminal device 100 shown in FIG. 1. As shown in FIG. 3B, a procedure of the method includes the following steps.

It should be noted that in the embodiment in FIG. 3B, a first terminal device does not include a camera and does not have a shooting function. The first device is the terminal device without the camera shown in FIG. 1.

S301 (B): At least one second terminal device sends, to the first terminal device, a to-be-shot image captured by a camera of the second terminal device and the first terminal device separately obtains the to-be-shot image captured by the second camera of the at least one second terminal device.

In an implementation, before the first terminal device communicates and interacts with the at least one second terminal device, the first terminal device receives a first operation of a user, and connects to the at least one second terminal device.

When the first terminal device receives the first operation of the user, and connects to the at least one second terminal device, a connection manner may include but is not limited to the following two manners.

Manner 1: The first terminal device receives the first operation of the user, and associates an identity ID number of the first terminal device with an identity ID number of the at least one second terminal device.

Manner 2: The first terminal device receives the first operation of the user, and sets an identity ID number of the first terminal device to be the same as an identity ID number of the at least one second terminal device.

The ID number represents an identity number of a terminal device, and is different from an identifier of the terminal device. The ID number is a pass for the terminal device to access an internet, and may be determined according to a rule formulated by the user.

In an implementation, before each of the at least one second terminal device sends a to-be-shot image of a camera of each of the at least one second terminal device to the first terminal device, each of the at least one second terminal device turns on the camera of each of the at least one second terminal device to perform image shooting, and simultaneously displays, on a display of each of the at least one second terminal device, the to-be-shot image captured by the camera of each of the at least one second terminal device.

In an implementation, the first terminal device may obtain the to-be-shot image of the second camera of the at least one second terminal device by using but not limited to a wireless transmission technology or a high-speed bus interface.

S302 (B): The first terminal device separately displays, in at least one viewfinder frame on a display of the first terminal device, the to-be-shot image captured by the second camera of the at least one second terminal device, where different to-be-shot images are displayed in different viewfinder frames.

In an implementation, the first terminal device displays in real time the to-be-shot image captured by the second camera of the at least one second terminal device in different viewfinder frames on the display of the first terminal device. In other words, one viewfinder frame corresponds to one to-be-shot image captured by the camera of the second terminal device.

Specifically, when the different viewfinder frames are displayed on the display of the first terminal device, display forms include but are not limited to the following several display forms.

A first display form: The different viewfinder frames are distributed on a display interface on the display of the first terminal device.

A second display form: The different viewfinder frames are distributed on different display interfaces on the display of the first terminal device, and each interface is used to display one viewfinder frame in full screen.

A third display form: Any one of the different viewfinder frames is displayed in full screen on the display of the first terminal device, and another viewfinder frame other than the viewfinder frame displayed in full screen in the different viewfinder frames hovers and is superimposed on the viewfinder frame displayed in full screen.

It should be noted that, in the first display form, the different viewfinder frames are distributed on the display interface on the display of the first terminal device. Specifically, how to distribute the different viewfinder frames horizontally or vertically is not specifically limited in this application. When the viewfinder frame is displayed in a hovering and superimposing manner, the user may perform an operation on the display with a finger, and switch between a viewfinder frame displayed in a hover box and a viewfinder frame displayed in full screen.

S303 (B): The first terminal device receives a shooting instruction of the user, and shoots, based on the shooting instruction, a to-be-shot image in at least one of the different viewfinder frames.

In an implementation, the first terminal device receives the shooting instruction of the user, and shoots, based on the shooting instruction by the first terminal device, an image in the at least one of the different viewfinder frames; and/or
the first terminal device receives the shooting instruction of the user, and sends, based on the shooting instruction, a shooting control instruction to a second terminal device respectively corresponding to the at least one viewfinder frame, where the shooting control instruction indicates the second terminal device respectively corresponding to the at least one viewfinder frame to shoot a to-be-shot image in the at least one second viewfinder frame.

Optionally, when a to-be-shot image captured by a second camera of each second terminal device is displayed on the display of the first terminal device in a viewfinder frame, the to-be-shot image captured by the second camera of each second terminal device may also be displayed on a display of each second terminal device.

In an implementation, an adjustment function used for the to-be-shot images in the different viewfinder frames is the same as an adjustment function used for to-be-shot images displayed on displays of corresponding second terminal devices. The adjustment function includes any one or a combination of the following: a filter function, an effect function, a facial beautification function, and a wide-angle shooting function.

For example, if the first terminal device determines to add a filter to a to-be-shot image of any viewfinder frame on the display by using the filter function, to be specific, after receiving a selection operation of the user, the first terminal device determines to use a light blue filter, the light blue filter is added to the image in the first viewfinder frame on the display of the first terminal device, and the light blue filter is also added to the image displayed on the display of the second terminal device corresponding to the first viewfinder frame.

Therefore, in the method provided in the embodiment of this application, the first terminal device obtains a to-be-shot image of a first camera of the first terminal device and/or a to-be-shot image of a second camera of the second terminal device. The first terminal device displays the to-be-shot image of the first camera in a first viewfinder frame on a display of the first terminal device, and/or displays the to-be-shot image of the second camera in a second viewfinder frame on a display of the first terminal device. The terminal device receives a shooting instruction of the user, and shoots, based on the shooting instruction, an image in the first viewfinder frame and/or the second viewfinder frame corresponding to different terminal devices. In this method, to-be-shot images captured by cameras of different terminal devices are displayed on the display of the first terminal device in different viewfinder frames. The first terminal device may flexibly control the cameras of different terminal devices to shoot an image in each viewfinder frame, to improve shooting experience of a user. In addition, in this solution, viewfinder frames corresponding to different terminal devices may be displayed in a full-screen manner or in a hovering and superimposing manner on the display of the first terminal device. In addition, the to-be-shot image of the camera of the second terminal device displayed on the display of the second terminal device may use a same adjustment function as that used by the second viewfinder frame on the display of the first terminal device, for example, a filter/effect/facial beautification function.

Based on the image shooting method provided in the foregoing embodiment, this application further provides a shooting embodiment. Optionally, this embodiment includes but is not limited to the following three scenarios. In the three scenarios, the first terminal device controls the second terminal device to perform image shooting (N image shooting devices, where N is greater than or equal to 1). It should be noted that, in the three scenarios, the first terminal device and the second terminal device respectively represent an intelligent device that controls the terminal device to perform image shooting and an intelligent device that is controlled to perform image shooting. The first terminal device may be an intelligent device that includes or does not include a camera, and the first terminal device may be portable to a user or placed at a fixed position. The second terminal device includes a front-facing camera and/or a rear-facing camera, and can implement a shooting function by using the camera of the second terminal device. In addition, the second terminal device may include a display, or may not include a display. For example, the second terminal device may be a device such as a TV, a tablet, a computer, a mobile phone, or a surveillance camera. The second terminal device may be flexibly moved or placed in a fixed position.

In addition, when the first terminal device includes a camera, the user may perform an operation on the first terminal device, to control the camera of the first terminal device to photograph a current person or object. The user may further bind an account of the first terminal device to an account of the second terminal device, for example, bind an identity (Identity, ID). Then, the user may perform an operation on the first terminal device, to control the camera of the second terminal device to photograph a current person or object.

When the first terminal device does not include a camera, the user may perform an operation on the first terminal device, to control the camera of the second terminal device to photograph a current person or object. Shooting content displayed on the display of the first terminal device or the second terminal device varies according to a location or an angle of the second terminal device, and does not vary according to a location or an angle of the first terminal device.

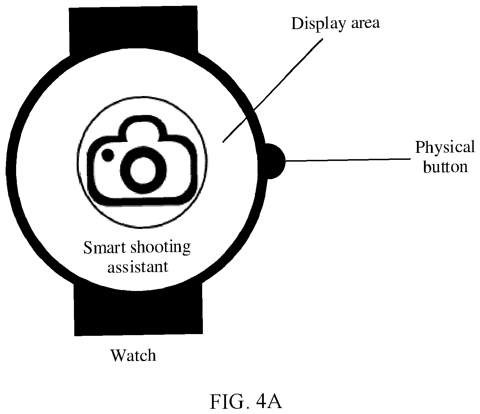

The following specifically describes three scenarios of embodiments of the present invention with reference to FIG. 4A to FIG. 4J(1) and FIG. 4J(2).

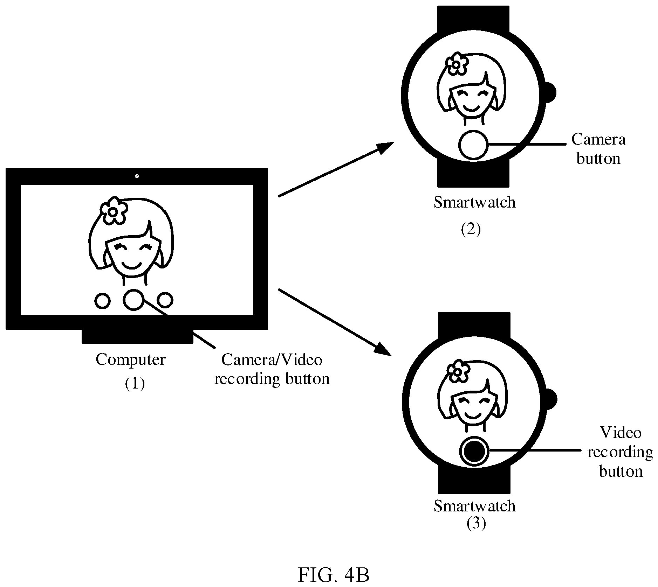

In a first scenario, one first terminal device (Take a smartwatch without a camera as an example, as shown in FIG. 4A.) controls one second terminal device (N second terminal devices, N=1), in which the second terminal device is a computer with a camera is used as an example. As shown in (1) in FIG. 4B, a specific procedure of the first scenario is as follows.

It should be noted that a camera in the second terminal device may be a front-facing camera of the device, or may be a rear-facing camera of the device, which may be switched based on actual usage. Details are not described herein again.

a101: A smartwatch receives a power-on instruction of a user and powers on.

In an implementation, as shown in FIG. 4A, the user may start the smartwatch by touching a power button in a display area of the smartwatch, or the user may start the smartwatch by pressing and holding a physical button on a right side of the smartwatch. Alternatively, the user may indicate, in a voice manner, the smartwatch to start by itself.

a102: The smartwatch finds an ID number of a nearby powered-on computer, and performs ID number association.

In an implementation, before the smartwatch finds the ID number of the nearby powered-on computer, and performs ID number association, the smartwatch may obtain the ID number of the nearby powered-on computer by self-searching. Alternatively, the user enables an ID search function of a nearby device in the smartwatch to obtain the ID number of the nearby powered-on computer.

In an implementation, the user may set an ID number of the smartwatch to the obtained ID number of the nearby computer, or the user may associate an ID number of the smartwatch with the obtained ID number of the nearby computer in settings of the smartwatch.

a103: The smartwatch receives a software search instruction of the user, and finds smart shooting assistant software of the smartwatch (as shown in FIG. 4A). The smartwatch receives a startup instruction of the user, and starts a smart shooting assistant function of the smartwatch based on the startup instruction, where a to-be-shot image currently displayed on a display of the computer is immediately displayed on a display of the smartwatch.

In an implementation, before the shooting assistant function of the smartwatch is started, a camera of an associated computer has been turned on by the user, the computer is in a shooting process, and a person currently photographed by the camera is displayed on the display of the computer, as shown in (1) in FIG. 4B.

In an implementation, the user may enable the smart shooting assistant function by tapping the smart shooting assistant software on the display of the smartwatch with a finger, or the user may enable the smart shooting assistant function by touching and pressing a physical button on a right side of the smartwatch, or the user indicates, through a voice, the smartwatch to start the smart shooting assistant function.

For example, as shown in (2) in FIG. 4B, the display of the smartwatch displays an interface of a person currently photographed by the computer. The interface is specifically an interface in which the smartwatch controls the camera of the computer to photograph the current person. Therefore, the user may photograph the current person by tapping a camera button displayed on the display of the smartwatch, that is, photograph the current person by using the camera of the computer, and display a photo of the person on the display of the smartwatch.

As shown in (3) in FIG. 4B, the display of the smartwatch displays an interface of the photographed person that is currently displayed on the display of the computer. The interface is specifically an interface in which the smartwatch controls the camera of the computer to perform video recording on the current person. Therefore, the user may perform video recording on the current person by tapping a video recording button displayed on the display of the smartwatch, that is, perform video recording on the current person by using the camera of the computer. In addition, a recorded video is displayed on the display of the smartwatch, and the video may be stored in the computer and/or the smartwatch, so that the user can view the video.

a104: The smartwatch receives an image shooting/video recording instruction of the user, and performs image shooting/video recording on a current person, where the current person is captured by the camera of the computer.

For example, as shown in (2) in FIG. 4B, the user may browse, through the display of the smartwatch, the person currently displayed on the display of the computer. In addition, the user may tap, with a finger, the camera button displayed on the display of the smartwatch, to control the camera of the computer to photograph the current person. Alternatively, as shown in (3) in FIG. 4B, the user may tap, with a finger, the video recording button displayed on the display of the smartwatch, to control the camera of the computer to perform video recording on the current person

For another example, the smartwatch may further control, by receiving a voice instruction of the user, the computer to photograph/record the current person, or the user touches a physical button on a right side of the smartwatch, to control the camera of the computer to photograph or record the current person.

To sum up, in the first scenario, a nearby smartwatch controls a viewfinder frame in a display of a computer, controls a camera of the computer to perform image shooting, and displays, on the display of the smartwatch, an image shot by the camera of the computer. However, in this scenario, only a camera of a single terminal device is controlled by a single terminal device to perform image shooting, and shooting of cameras of a plurality of terminal devices cannot be implemented via a single terminal device.

Therefore, for a problem that a single terminal device cannot control cameras of a plurality of terminal devices to perform image shooting in the foregoing first scenario, this embodiment of this application further provides the following second and third scenarios, to resolve a problem that a single terminal device cannot control cameras of a plurality of terminal devices to perform image shooting. Details are as follows.

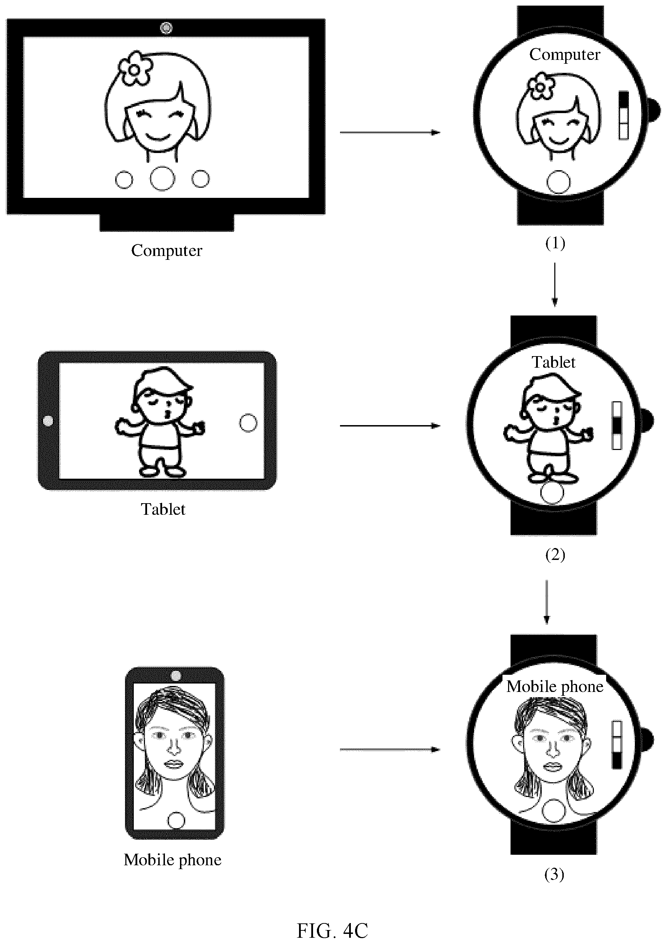

In a second scenario, one first terminal device (Take a smartwatch without a camera as an example, as shown in FIG. 4A.) controls a plurality of second terminal devices to perform image shooting (N second terminal devices, N>1). As shown in FIG. 4C, for example, the plurality of second terminal devices may be a computer, a tablet, and a mobile phone that are provided with a camera (N=3). The following is a specific procedure of the second scenario.

b101: A smartwatch receives a power-on instruction of a user and powers on.

In an implementation, as shown in FIG. 4A, the user may touch a power button in a display area of the smartwatch to start the smartwatch, or the user may press and hold a physical button on a right side of the smartwatch to start the smartwatch, or the user may indicate, through a voice, the smartwatch to start.

b102: The smartwatch finds ID numbers of a nearby powered-on computer, tablet, and mobile phone, and performs ID number association.

In an implementation, the user may set the ID numbers of the computer, the tablet, and the mobile phone to a same ID number as an ID of the smartwatch. Alternatively, the user may separately associate, in setting of the smartwatch, the ID of the smartwatch with the ID numbers of the found computer, tablet, and mobile phone.

b103: The smartwatch receives a software search instruction of the user, and finds smart shooting assistant software of the smartwatch (as shown in FIG. 4A). The smartwatch receives a startup instruction of the user, and starts a smart shooting assistant function of the smartwatch based on the startup instruction, where shooting content currently displayed on a display of the computer/tablet/mobile phone is immediately displayed on a display of the smartwatch, as shown in FIG. 4C.

In an implementation, before the shooting support function of the smartwatch is started, camera of the computer, the tablet, and the mobile phone are turned on by a user, the computer, the tablet, and the mobile phone are in a shooting process, and displays of the computer, the tablet, and the mobile phone respectively display images shot by the camera of the computer, the tablet, and the mobile phone, as shown in FIG. 4C.

In an implementation, the user may enable the smart shooting assistant function by tapping the smart shooting assistant software on the display of the smartwatch with a finger, or the user may enable the smart shooting assistant function by pressing a physical button on a right side of the smartwatch, or the user indicates, through a voice, the smartwatch to start the smart shooting assistant function.

For example, when the smart shooting assistant function of the smartwatch is started, the smartwatch respectively obtains information about physical reach between the smartwatch and a computer, a tablet, or a mobile phone, and determines a device that has smallest physical reach from the smartwatch. To be specific, after it is determined to start a smart shooting assistant software of the smartwatch, a to-be-shot image currently displayed on a display of a device closest to the smartwatch is automatically displayed by default on the display of the smartwatch. For example, when the smartwatch determines that the computer is physically closest, after the smart shooting assistant software is started, the display of the smartwatch displays a currently photographed person displayed on the display of the computer, as shown in (1) in FIG. 4C.

For example, the display of the smartwatch displays a to-be-shot image currently displayed on the display of the computer, as shown in (1) in FIG. 4C. The user may slide upwards on the display of the smartwatch with a finger, so that a currently displayed interface of the display of the smartwatch is switched to a photographed person currently displayed on the display of the television, as shown in (2) in FIG. 4C. The user may continue to slide upwards on the display of the smartwatch with a finger, so that an interface currently displayed on the display of the smartwatch is switched to a photographed person currently displayed on the display of the tablet, as shown in (3) in FIG. 4C. The user further slides up on the display of the smartwatch with a finger, so that an interface displayed on the display of the smartwatch is switched to a photographed person currently displayed on the display of the mobile phone. Similarly, the user may further slide in an opposite direction to switch back and forth shooting content currently displayed on different device displays.

In addition, the user slides up and down on the display of the smartwatch with a finger to switch an interface displayed on the display of the smartwatch. A sequence of switching to the displays of the computer, the television, the tablet, and the mobile phone may be determined by physical reach (that is, a value of physical reach) from the smartwatch, for example, from near to far (the physical reach value is in an ascending order).

b104: The smartwatch receives an image shooting/video recording instruction of the user, and performs image shooting/video recording on a current person, where the current person is captured by the camera of the computer/tablet/mobile phone.

For example, as shown in (1) in FIG. 4C, the user may browse, through the display of the smartwatch, the person currently displayed on the display of the computer. In addition, the user may tap, with a finger, a camera button/video recording button displayed on the display of the smartwatch, to control the camera of the computer to perform image shooting/video recording on the current person.

For another example, the smartwatch may further control, by receiving an image shooting/video recording voice instruction of the user, the camera of the computer to photograph/record the current person, or the user presses a physical button on a right side of the smartwatch, to control the camera of the computer to photograph/record the current person.

For example, the user may further slide up the display of the smartwatch with a finger, switch an interface shot by the camera of the computer currently displayed on the display of the smartwatch to an interface shot by the camera of the tablet. The user may operate the smartwatch to control the camera of the tablet to photograph or record a current person, as shown in (2) in FIG. 4C. The user may further continue to slide up the display of the smartwatch with a finger, so that an interface shot by the camera of the tablet displayed on the display of the smartwatch is switched to an interface shot by a camera of the mobile phone, as shown in (3) in FIG. 4C. Therefore, the user may slide up or down the display of the smartwatch with a finger, switch interfaces shot by different devices, and control cameras of different devices to photograph different people or a same person.

To sum up, in the second scenario, a short-distance smartwatch that does not include a camera controls viewfinder frames of a plurality of different terminal devices, controls cameras of the plurality of terminal devices to perform image shooting, and displays, on the display of the smartwatch, images shot by the cameras of the different terminal devices. In this scenario, a single terminal device controls the cameras of the plurality of terminal devices to perform image shooting, and this improves shooting experience of a user.

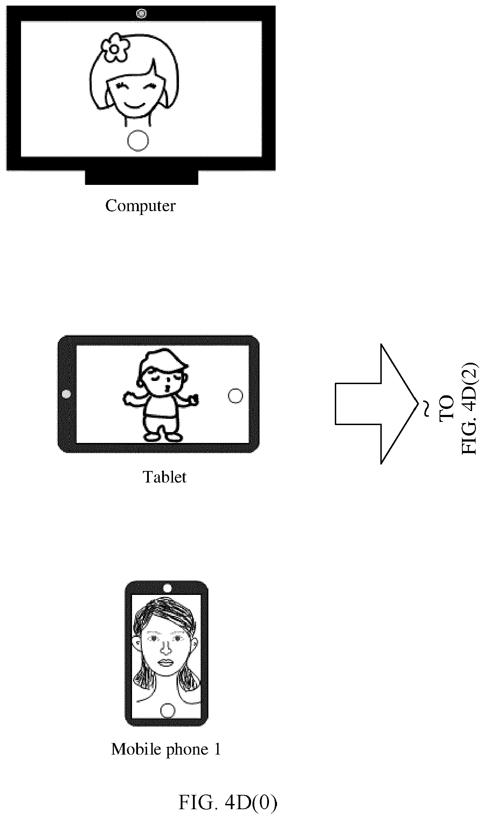

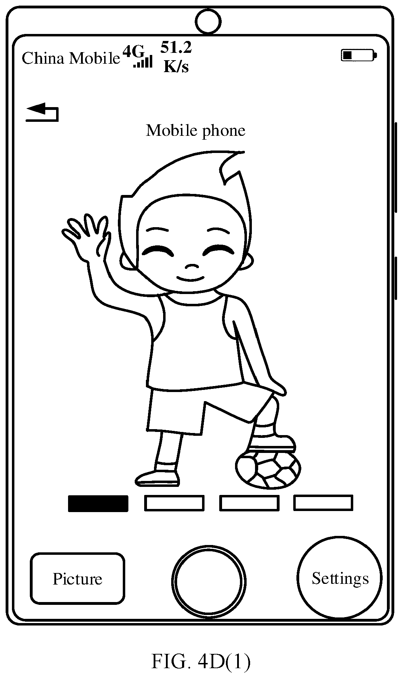

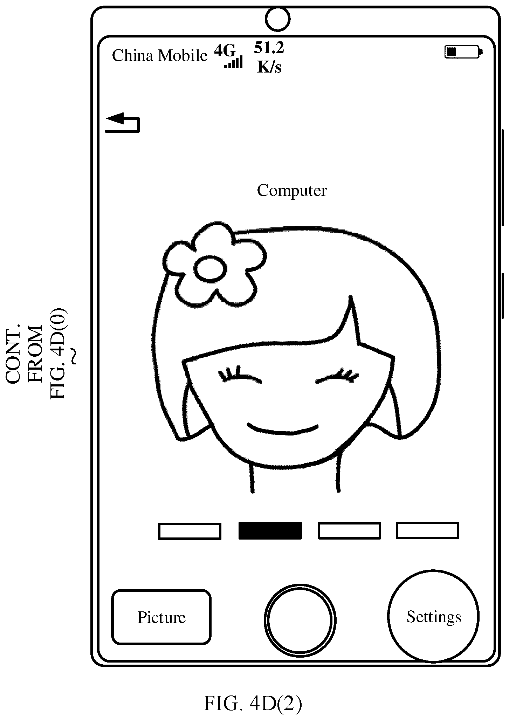

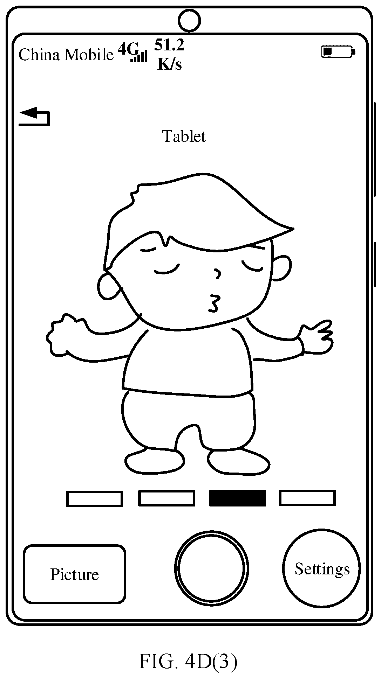

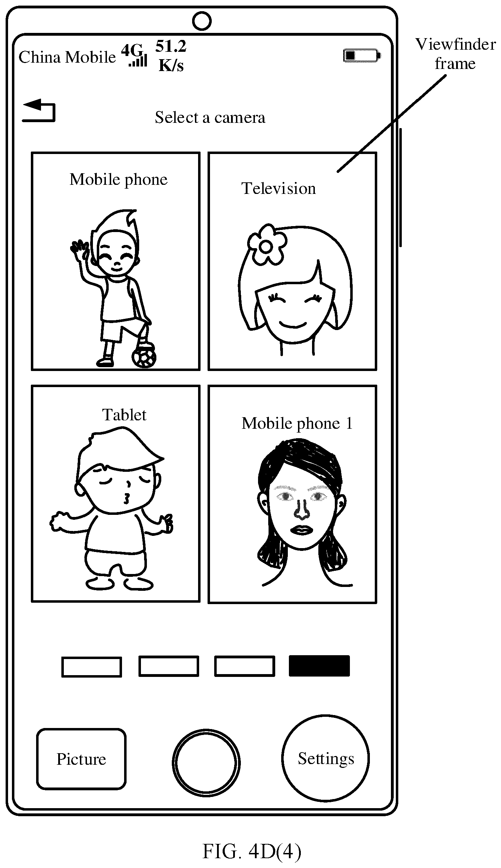

In a third scenario, as shown in FIG. 4D(0) to FIG. 4D(4), one first terminal device (for example, a smartphone with a camera) controls a plurality of second terminal devices (N second terminal devices, N>1) to perform image shooting. For example, the plurality of second terminal devices may be a computer, a television, a tablet, or another mobile phone with a camera respectively (that is, N=4). The following is a specific procedure of the third scenario.

c101: A smartphone receives a power-on instruction of a user, and powers on.

In an implementation, the user may press a power button in a display area of the smartphone to start the smartphone, or the user may press and hold a physical power-on button of the smartphone to start the smartphone, or the user may indicate, through a voice, the smartphone to start.

c102: The smartphone searches for ID numbers of a nearby powered-on computer, tablet, and another mobile phone (for example, mobile phone 1), and performs ID number association.

In an implementation, different devices separately associate ID numbers with the smartphone. A specific manner is the same as that in b102. Details are not described herein again.

c103: The smartphone receives a software search instruction of the user, finds a smart shooting assistant software, and starts the smart shooting assistant software. A to-be-shot image currently displayed on a display of the smartwatch is immediately displayed by using four viewfinder frames on a display of the smartphone/computer/tablet/mobile phone 1, and one viewfinder frame corresponds to a to-be-shot image of a camera of one terminal device. As shown in FIG. 4D(0) to FIG. 4D(4), the smartwatch receives an image shooting/video recording instruction of the user, and performs image shooting/video recording on a current person in the viewfinder frame, where the current person is captured by a camera of the smartphone/computer/tablet/mobile phone 1.

In an image shooting device selection manner, after a user enables a smart shooting assistant function of the smartphone, a display of the smartphone immediately displays a person image currently captured by a camera of the smartphone. The user can slide left or right to switch between images captured by cameras of different devices. A sequence of sliding to switch to interfaces of different image shooting devices is determined by physical reach between the image shooting device and the smartphone. Closer physical reach indicates a higher priority of an interface of an image shot by a device. Specifically, the method is similar to the method described in b103. Details are not described herein again.

For example, the display of the smartphone displays a to-be-shot image currently captured by a camera of the smartphone, as shown in FIG. 4D(1). As shown in FIG. 4D(2), the user slides leftward on the smartphone with a finger, to switch to a shooting person currently displayed on a display of a computer As shown in FIG. 4D(3), the user may continue to slide leftward on the display of the smartphone with a finger, to switch to a shooting person currently displayed on a display of a tablet. As shown in FIG. 4D(4), when the user continues to slide leftward on the display of the smartphone with a finger to a last image shooting device mobile phone 1, to-be-shot images currently captured by cameras of all image shooting devices that have IDs associated with the smartphone are separately displayed on the display of the smartphone by using four viewfinder frames.

The photo displayed on the display of the smartphone is used by the user to view a shot image or video. A setting function displayed on the display of the smartphone is used to set a scale, a frame, or the like of the display. Details are not described herein again.

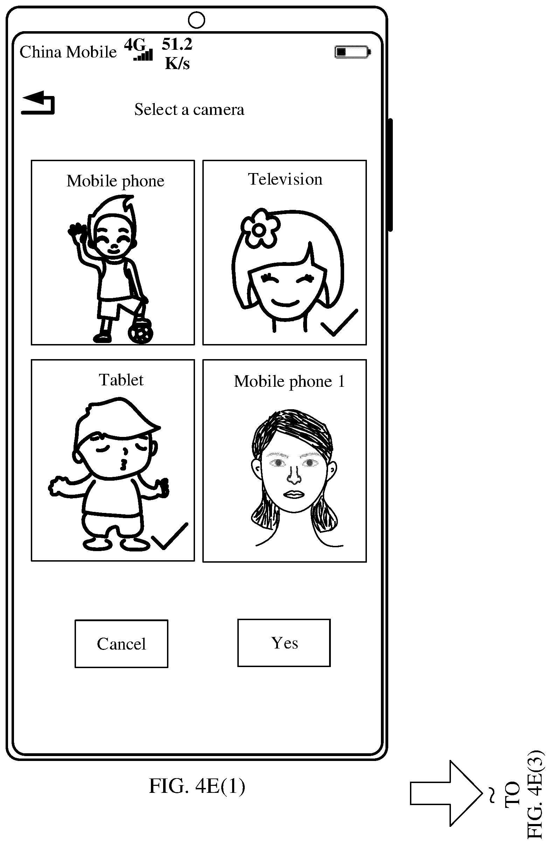

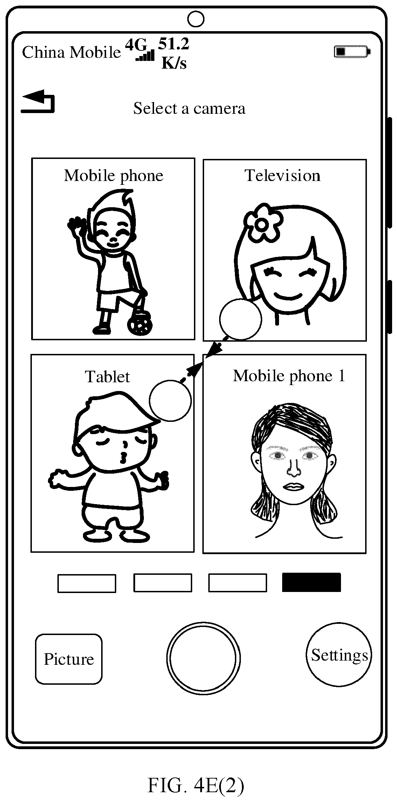

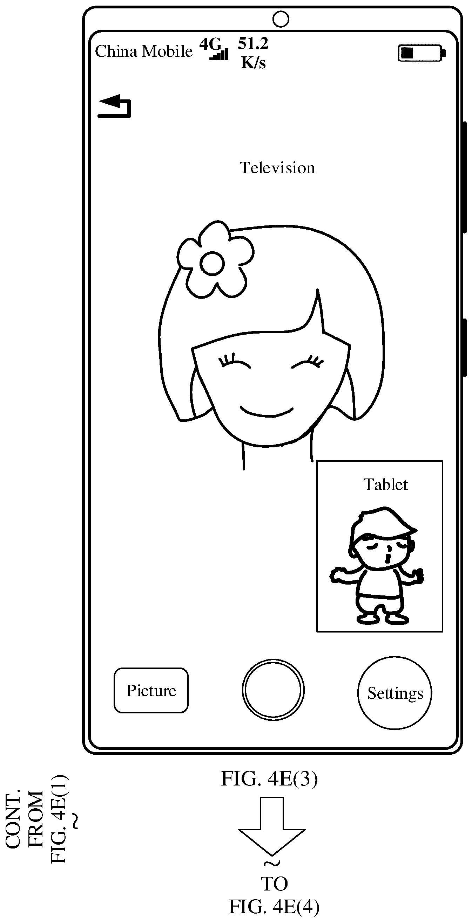

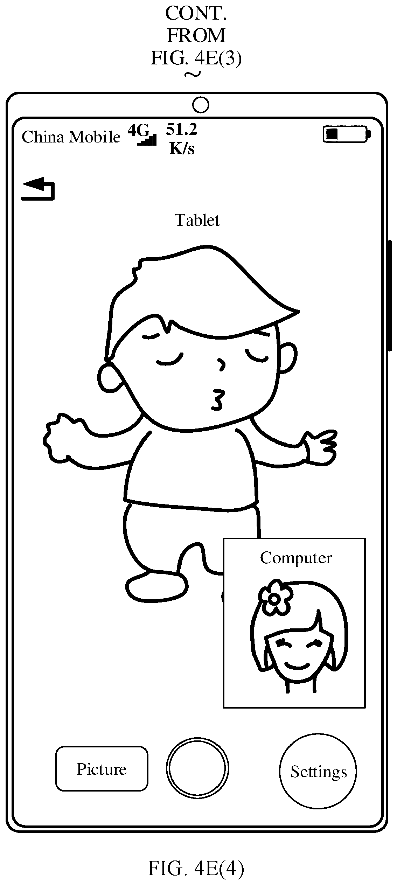

As shown in FIG. 4E(1), in four shooting screens displayed on a display of a smartphone, a user may select two viewfinder frames by pressing using a finger, for example, a viewfinder frame corresponding to a television and a viewfinder frame corresponding to a tablet, and tap a lower OK button to create a composite interface. Alternatively, as shown in FIG. 4E(2), in the four viewfinder frames displayed on the display of the smartphone, the user may place positions of any two viewfinder frames by using two fingers, and perform close pinching to create a composite interface.

As shown in FIG. 4E(3), only a to-be-shot image of the television and a to-be-shot image of the mobile phone are displayed in the composite interface. By default, the smartphone displays a viewfinder frame that is first tapped by the user (the television as a first selected object) in full screen. The viewfinder frame secondly selected by the user is displayed through a smaller viewfinder frame (the tablet is used as a secondary selection object), and hovers at the top of the display of the smartphone. Alternatively, position movement may be generated by any drag by the user with a finger on a full screen of the smartphone.

In an implementation, the user may switch between a full-screen effect and a hover effect by tapping two viewfinder frames included in the composite interface with a finger. For example, as shown in FIG. 4E(3), when the user taps a hover interface of a tablet, the viewfinder frame of the tablet is switched to display in full screen. The viewfinder frame of the television is automatically switched to display in a hover box, as shown in FIG. 4E(4), that is, switching between the viewfinder frame in FIG. 4E(3) and in FIG. 4E(4) may be performed by the user according to an actual shooting situation.

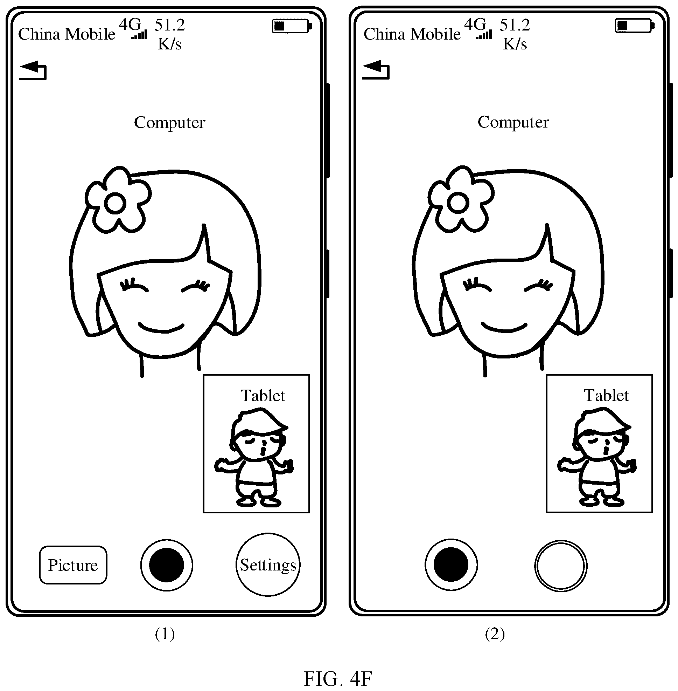

In addition, in the composite interface, if no specific special effect or shooting mode is set for a device displayed in a hover box, a shooting mode set by the device in full-screen display is used by default, to perform image shooting. For example, on a display of a smartphone, a viewfinder frame of a computer is displayed in full screen, and the user sets a shooting mode of the computer to take a photo of a current person. In this case, a tablet displayed in a hover box also uses a camera to take a photo, as shown in FIG. 4E(3). Alternatively, on a display of a smartphone, a viewfinder frame of a computer is displayed in full screen, and the user switches a camera button on a display of the computer to a video recording button, to photograph a current person, and the tablet displayed in a hover box also uses a camera to perform image shooting, as shown in (1) in FIG. 4F.

Alternatively, in the composite interface, the user may separately set a shooting mode for a device displayed in full screen and a device displayed in a hover box. As shown in (2) in FIG. 4F, a video recording button at a lower left corner of a display of a smartphone is used to control a camera of the computer to photograph a current person. A camera button at a lower right corner of the display of the smartphone is used to control a camera of the tablet to photograph the current person.

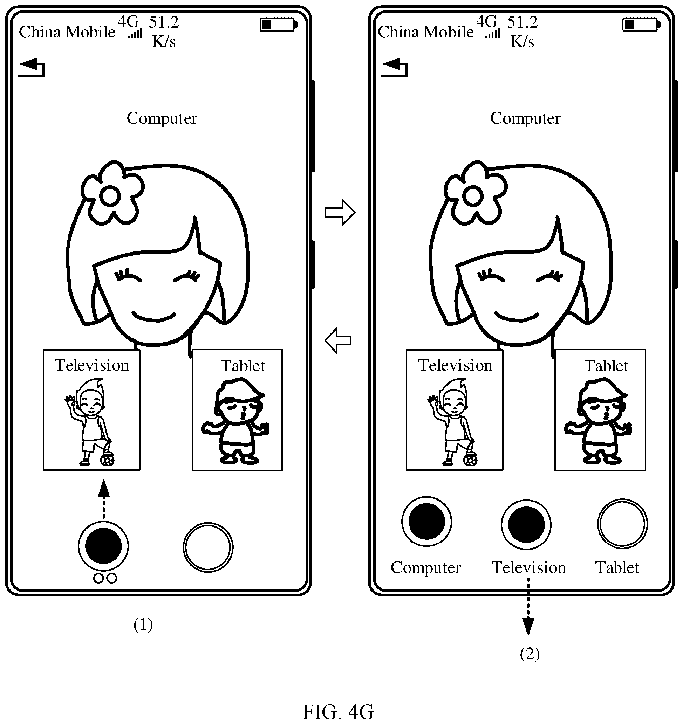

In an implementation, on the display of the smartphone in FIG. 4E(1) or FIG. 4E(2), the user determines viewfinder frames of a plurality of devices in a finger tapping determining manner or a finger pinching manner, to obtain a composite interface, for example, the composite interface includes to-be-shot images of a computer, a television, and a tablet. If a computer and a television are currently in a video recording mode, and a tablet is in a shooting mode, as shown in (1) in FIG. 4G, a video recording button of the computer and a video recording button of the television may be combined and aggregated; or the user uses a finger to press and hold the combined video recording buttons and slide upwards, so that the video recording button of the computer and the video recording button of the television may be spread and displayed, as shown in (2) in FIG. 4G. Similarly, in (2) in FIG. 4G, the user may also press and hold a video recording button of any device of a television or a computer, and slide down to aggregate the two video recording buttons, to obtain a display effect in (1) in FIG. 4G.

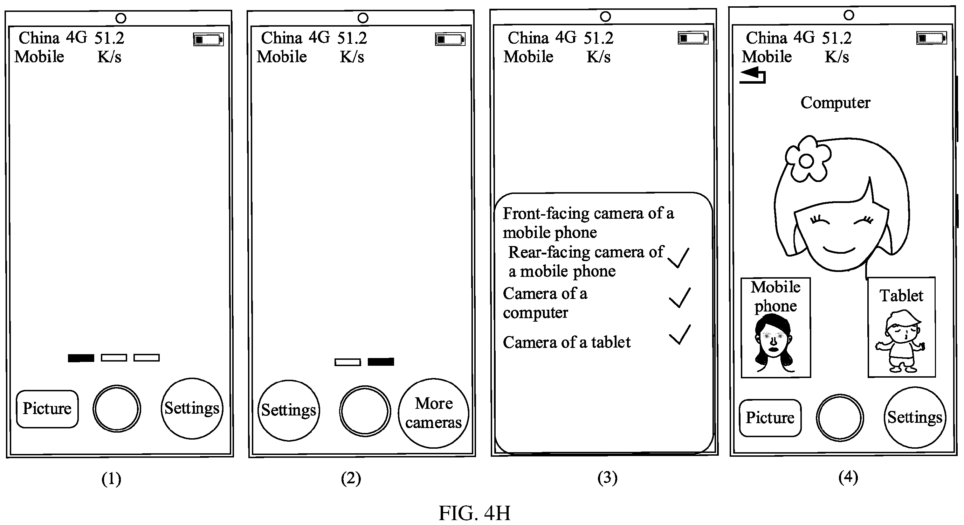

In another image shooting device selection manner, after the user enables a smart shooting assistant function of the smartphone, a display of the smartphone immediately displays a person image currently captured by a camera of the smartphone (an image captured by a rear-facing camera of the mobile phone is used as an example), as shown in (1) in FIG. 4H. The user may use a finger to slide left or right to switch between a plurality of buttons below. When a button of "more cameras" appears on a display of the smartphone, as shown in (2) in FIG. 4H, the user may tap the button, and the display of the smartphone displays options of cameras corresponding to a plurality of image shooting devices. The plurality of image shooting devices are associated with the smartphone through IDs in advance, for example, a front-facing camera of a mobile phone, a rear-facing camera of a mobile phone, a camera of a computer, or a camera of a tablet. The user may select, according to an actual situation, a camera corresponding to any one or more devices, as shown in (3) in FIG. 4H. For example, the user selects the front-facing camera of the mobile phone and the camera of the computer

After the user selects the image shooting device, the display of the smartphone displays a shooting screen synthesized by the plurality of devices selected by the user. As shown in (4) in FIG. 4H, the display of the smartphone displays a person currently photographed by the rear-facing camera of the mobile phone, a person currently photographed by the computer camera and a person currently photographed by the camera of the tablet, and an image shooting device selected by a user for the first time is displayed in full screen by default, for example, a person interface photographed by the rear-facing camera of the mobile phone is displayed in full screen. A viewfinder frame of the person currently photographed by the camera of the computer and the camera of the tablet is in a hover interface manner on the display of the smartphone, and the user may move the suspended viewfinder on the display of the smartphone with a finger. The user can tap any suspended viewfinder frame to switch to display in full screen.

As shown in (4) in FIG. 4H, three viewfinder frames on the display of a current smartphone respectively display the person currently photographed by the rear-facing camera of the smartphone, the person currently photographed by the computer camera, and the person currently photographed by the tablet camera. It should be noted that: This mode is only a scenario in which different devices take photos. Therefore, only one camera button is displayed under the display of the smartphone, and the user controls, through the camera button, different devices to take photos. A photo function displayed on the display of the smartphone is used for viewing by a user. A setting function displayed on the display of the smartphone is used to set a scale, a frame, or the like of the display. Details are not described herein again.

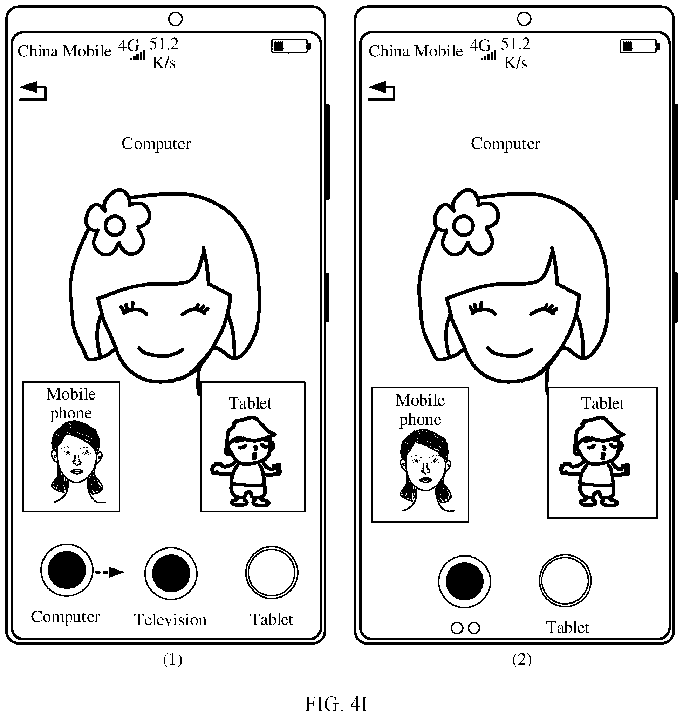

As shown in (1) in FIG. 4I, a current display of a smartphone displays a viewfinder frame of a currently shooting person by a rear-facing camera of the smartphone, a viewfinder frame of a currently shooting person by a computer camera, and a viewfinder frame of a currently shooting person by a tablet camera. It should be noted that, according to the viewfinder frame of each device displayed on the display of the smartphone, it may be learned that the computer camera and the rear-facing camera of the smartphone take a photo of the current person, and the tablet camera performs video recording on the current person. Therefore, a shooting button corresponding to a computer, a smartphone, and a tablet is displayed at a lower part of the display of the smartphone. Specifically, the computer corresponds to a video recording button, the smartphone corresponds to a video recording button, and the tablet corresponds to a camera button.

Alternatively, video recording buttons corresponding to the computer and the smartphone may be pinched or slide up and down with a finger of the user, to combine or expand. For details, refer to the description in FIG. 4G. Details are not described herein again. Combined display of the video recording buttons corresponding to the computer and the smartphone is shown in (2) in FIG. 4I.

To sum up, in the third scenario, in one aspect, a short-distance smartphone that includes a camera controls viewfinder frames of a plurality of different terminal devices, and simultaneously controls cameras of a plurality of other terminal devices to perform image shooting, and displays, on a display of the smartphone, a viewfinder frame that includes shooting by the camera of the smartphone, and other viewfinder frames shot by cameras of different terminal devices. In another aspect, the viewfinder frames of the plurality of terminal devices displayed on the display of the smartphone may be displayed in a full-screen or displayed in a hover box, and viewfinder frames of each terminal device may be flexibly switched according to a user requirement in full screen or a hover box on the display of the smartphone.

Based on the third scenario, this application further provides a scenario in a shooting embodiment. Based on FIG. 4G, a user selects cameras of a plurality of terminal devices. The plurality of terminal devices are specifically a computer, a television, and a tablet. The display of the smartphone displays viewfinder frames shot by cameras of the plurality of terminal devices, and the smartphone simultaneously controls the cameras of the plurality of terminal devices to perform image shooting. In this embodiment, interfaces of viewfinder frames of the plurality of devices displayed on the display of the smartphone are projected to a large-screen terminal device that has established an ID association with the smartphone (e.g., a smart screen or a large-screen TV with a camera).

For example, a large-screen television is used as an example of a large-screen terminal device. On a display of the large-screen television, viewfinder frames of different terminal devices are displayed in a vertical splitscreen mode, and a camera or video recording button is corresponding to a lower part of each split screen, as shown in FIG. 4J(1) and FIG. 4J(2).

In FIG. 4J(1) and FIG. 4J(2), viewfinder frames corresponding to a computer, a television, and a tablet are respectively displayed on the display of the large-screen television. The computer corresponds to a video recording button, and a camera of the computer may be controlled to photograph a current person through the video recording button. The television corresponds to a video recording button, and the video recording button may be used to control a camera of the television to photograph a current person. The tablet corresponds to a camera button, and a camera of the tablet may be controlled to photograph a current person through the camera button.

Both viewfinder frames in the computer and the television correspond to a video recording button. The user may pinch the video recording buttons corresponding to the two terminal devices with a finger to merge, or the user touches one of the video recording buttons to slide upwards to merge, and the user touches the combined video recording button to slide downwards to expand. Reference may be made to the foregoing description in FIG. 4G or FIG. 4I. Details are not described herein again.

Based on the image shooting method provided in the foregoing embodiment, this application further provides a shooting embodiment. In the embodiment, a second terminal device is controlled via a first terminal device (N second terminal devices, where N is greater than or equal to 1) to perform image shooting. It should be noted that, the first terminal device and the second terminal device are configured to represent an intelligent device that controls the terminal device to perform image shooting and an intelligent device that is controlled to perform image shooting. The first terminal device may be an intelligent device that includes or does not include a camera. For example, the first terminal device may be a smartphone that does not include a camera, and the first terminal device may be carried by a user or placed in a fixed position. The second terminal device includes a front-facing camera and/or a rear-facing camera. For example, the second terminal device may be a terminal device such as a TV, a tablet, a computer, or a mobile phone, and the second terminal device may be placed in a fixed position.

In addition, when the first terminal device includes a camera, the user implements, via the first terminal device, simultaneous control of cameras of a plurality of terminal devices to perform image shooting, and at the same time, the user may further control, via the first terminal device, an adaptation function of a shooting viewfinder of the second terminal device.

In an implementation, as shown in FIG. 5A, a smartphone and a large-screen terminal device (e.g., a smart screen or large-screen television with a camera) that has established an ID association with the smartphone. Take the large-screen television as an example. A display of the smartphone is switched to a viewfinder frame shot by the smartphone. When shooting a current person, a camera of the smartphone projects the shooting viewfinder frame of the smartphone onto a display of the large-screen television with which the smartphone has established an ID association. After an adaptation function of the smartphone is started, for example, a shooting mode, a wide aperture, a filter, and a portrait of a third-party camera involved in shooting, a related key button is displayed in a shooting viewfinder of the second terminal device on the display of the smartphone. At the same time, the display of the large-screen television can also display a related key button. The user may perform beautification or color adjustment on a person's photo or video taken by the camera of the smartphone by operating an adaptation function button.

Specifically, as shown in FIG. 5B(1), the display of the smartphone displays a viewfinder frame shot by the camera of the smartphone, and a photo button, a camera button, and a camera switching button are displayed under the viewfinder frame. The photo button is used by the user to view a shot image or video. The camera button is used to take a photo of the current person, and the camera switching button is used to switch back and forth between a front-facing camera and a rear-facing camera of the smartphone. In addition, key buttons for adaptation functions are displayed below the viewfinder frame, including: wide aperture, filter, portrait, camera, video recording, and profession. The user can press the portrait button to display "facial beautification" and "effect" buttons above the portrait button, and the user can continue to press the corresponding button to beautify or set special effect on a currently shooting person. When the user operates the "facial beautification" button, the operation includes adjustment of a skin tone color of the person, adjustment of a face shape of the person, and the like, to perform corresponding facial beautification on the person in the viewfinder frame currently photographed by the smartphone. When the user operates the "effects" button, the effects include character's headdress, character's emoticon pack, and so on.

For specific facial beautification and effect functions, refer to existing mobile phone beauty software, such as Meitupic and BeautyCam. Details are not described herein again.

At the same time, after the smartphone projects the shooting viewfinder frame onto the display of the large-screen television with which the smartphone has established an ID association, the shooting viewfinder frame of the smartphone and the corresponding function adaptation button (key position and function adaptation) are displayed on the display of the large-screen television. For details, refer to FIG. 5B(2). The user may perform corresponding beautification or color adjustment on the currently shooting person by operating the key button of the adaptation function displayed on the display of the smartphone, or may perform corresponding beautification or color adjustment on the currently shooting person by operating the function adaptation button displayed on the display of the large-screen television.

For example, when the user operates the "effect" button, a plurality of effects are automatically displayed on a left side of the current shooting viewfinder frame of the smartphone, including a headwear of a person, an emoticon pack of a person, and the like, as shown in FIG. 5C. When the user selects a 1^{st} effect, the effect may be displayed on a basis of the person in the viewfinder frame currently photographed by the smartphone, as shown in FIG. 5D(1). In addition, the display of the large-screen television also displays a person whose effect is added to the viewfinder frame shot by the smartphone, as shown in FIG. 5D(2). It should be noted that a quantity of effects in this embodiment of this application includes but is not limited to several shown in FIG. 5D(1) and FIG. 5D(2).

In an implementation, when the corresponding function adaptation button is displayed on the display of the large-screen television, the buttons are displayed on both the left side and the right side of the display, to ensure that a viewfinder image can be completely displayed.

Based on the foregoing description, a first terminal device (a smartphone is used as an example) controls a camera of the first terminal device to perform image shooting, and the first terminal device starts a shooting adaptation function, that is, by using a function adaptation button displayed on a display of the first terminal device, adjusts a face or a color of a person currently photographed by a camera of the smartphone. In addition, the smartphone can further project a viewfinder frame shot by the smartphone onto a display of a large-screen terminal device (a large-screen television is used as an example) that has established an ID association with the smartphone, and display the viewfinder frame on the display of the large-screen terminal device.

In another embodiment, a smartphone and a large-screen terminal device (e.g., a smart screen or large-screen television with a camera) that has established an ID association with the smartphone. Take the large-screen television as an example. The display of the smartphone is switched to a viewfinder frame shot by the large-screen television, and a current person by using a camera of the large-screen television is photographed. After the adaptation function of the smartphone is started, a key button of the adaptation function under the viewfinder frame is displayed on the display of the smartphone, including: wide aperture, filter, portrait, photograph, video recording, profession. The user presses the portrait button, and the viewfinder frame and key buttons for related adaptation functions are displayed on the display of the large-screen television. Therefore, the user may perform beautification, color adjustment, or the like on a person photo or a video photographed by the camera of the large-screen television by operating an adaptation function button displayed on the display of the smartphone or operating an adaptation function button displayed on the display of the large-screen television. For example, for a specific operation description, refer to the description in FIG. 5D(1) and FIG. 5D(2).

For example, a viewfinder frame currently shot by the camera of the large-screen computer is displayed on the display of the smartphone, that is, the smartphone controls the camera of the large-screen computer to photograph a current person. A plurality of key buttons for adapting functions are displayed under a viewfinder frame displayed on the display of the smartphone. When the user operates the "effect" button, a plurality of effects are automatically displayed on a left side of the current shooting viewfinder frame of the large-screen computer displayed on the display of the smartphone, including a headwear of a person, an emoticon pack of a person, and the like, as shown in FIG. 5E(1). When the user selects a 1st effect, the effect may be displayed on a basis of the person in the viewfinder frame displayed on the display of the smartphone, as shown in FIG. 5E(1). In addition, a person to which the effect is added is displayed in the viewfinder frame of the display of the large-screen television, as shown in FIG. 5E(2). It should be noted that a quantity of effects in this embodiment of this application includes but is not limited to several shown in FIG. 5E(1) and FIG. 5E(2).

In conclusion, when a first terminal device (for example, a smartphone) that is in a short distance and includes a camera controls a viewfinder of the first terminal device or another second terminal device (for example, a large-screen television), and simultaneously controls a camera of the first terminal device or a plurality of other second terminal devices to perform image shooting, an adaptation function (equivalent to an adjustment function) related to shooting in the first terminal device is applicable to another terminal device that is controlled to perform image shooting. For example, when the smartphone applies the adaptation function of the smartphone to perform facial beautification, effect addition, filter adjustment, and the like on a scene shot by controlling the large-screen television, the large-screen television uses the same adaptation function to perform facial beautification, effect addition, filter adjustment, and the like on a current shooting scene of the smartphone.

Based on a same technical concept, an embodiment of this application further provides a first terminal device. As shown in FIG. 6, the device 600 may include a shooting unit 601, a communication unit 602, a display unit 603, and a processing unit 604. The following specifically describes the units.

The shooting unit 601 is configured to capture a to-be-shot image.

The communication unit 602 is configured to obtain the to-be-shot image captured by the shooting unit 601 and a to-be-shot image captured by a second camera of a second terminal device.

The display unit 603 is configured to display, in a first viewfinder frame, the to-be-shot image captured by the shooting unit 601, and display, in a second viewfinder frame, the to-be-shot image captured by the second camera

The processing unit 604 is configured to receive a shooting instruction of a user, and then shoot images in the first viewfinder frame and the second viewfinder frame based on the shooting instruction.

In a possible design, the communication unit 602 is further configured to: before obtaining a to-be-shot image captured by a first camera of the first terminal device and a to-be-shot image captured by a second camera of the second terminal device, receive a first operation of the user, and connect to the second terminal device. When receiving the first operation of the user and connecting to the second terminal device, the communication unit 602 is specifically configured to: receive the first operation of the user, and associate an ID number of the terminal device with an ID number of the second terminal device, or receive the first operation of the user, and set an ID number of the terminal device to be the same as an ID number of the second terminal device.

In a possible design, the display unit 603 is configured to distribute the first viewfinder frame and the second viewfinder frame abreast, and a to-be-shot image captured by a camera of the terminal device is displayed in the first viewfinder frame in real time, and a to-be-shot image captured by a camera of the second terminal device is displayed in the second viewfinder frame in real time. Alternatively, the display unit 603 is configured to distribute the first viewfinder frame and the second viewfinder frame on different interfaces, where each interface is used to display one viewfinder frame in full screen, and a to-be-shot image captured by a camera of the terminal device is displayed on the first viewfinder frame in real time, and a to-be-shot image captured by a camera of the second terminal device is displayed on the second viewfinder frame in real time. Alternatively, the display unit 603 is configured to hover and superimpose the first viewfinder frame on the second viewfinder frame, where the to-be-shot image captured by a camera of the terminal device is displayed on the first viewfinder frame in real time, and the to-be-shot image captured by a camera of the second terminal device is displayed on the second viewfinder frame in real time. Alternatively, the display unit 603 is configured to hover and superimpose the first viewfinder frame under the second viewfinder frame, where the to-be-shot image captured by the camera of the terminal device is displayed on the first viewfinder frame in real time, and the to-be-shot image captured by the camera of the second terminal device is displayed on the second viewfinder frame in real time.

In a possible design, after receiving the shooting instruction of the user, shoot images in the first viewfinder frame and the second viewfinder frame based on the shooting instruction, the processing unit 604 is specifically configured to:
receive a first shooting instruction of the user through the communication unit, and shoots the image in the first viewfinder frame by using the first camera based on the first shooting instruction; and/or receive a second shooting instruction of the user through the communication unit, and send a shooting control instruction to the second terminal device based on the second shooting instruction, where the shooting control instruction indicates the second camera to shoot the images in the second viewfinder frame.

In a possible design, an adjustment function used for the to-be-shot image of the second camera in the second viewfinder frame is the same as an adjustment function used for the to-be-shot image that is of the second camera and that is displayed on the display of the second terminal device.

In a possible design, the adjustment function includes any one or a combination of the following: a filter function, a special effect function, a facial beautification function, and a wide-angle shooting function.

Based on a same technical concept, an embodiment of this application further provides a first terminal device. As shown in FIG. 7, the device 700 may include a communication unit 701, a display unit 702, and a processing unit 703. The following specifically describes the units.

The communication unit 701 is configured to separately obtain a to-be-shot image captured by a second camera of at least one second terminal device.

The display unit 702 is configured to separately display, in at least one viewfinder frame, the to-be-shot image captured by the second camera of the at least one second terminal device, where different to-be-shot images are displayed in different viewfinder frames.

The processing unit 703 is configured to receive a shooting instruction of a user, and shoot, based on the shooting instruction, a to-be-shot image in at least one of the different viewfinder frames.

In a possible design, the processing unit 703 is further configured to: before the communication unit 701 separately obtains the to-be-shot image captured by the second camera of the at least one second terminal device, receive a first operation of the user, and associate an identity ID number with an identity ID number of the at least one second terminal device; or receive a first operation of the user, and sets an identity ID number to be the same as an identity ID number of the at least one second terminal device.

In a possible design, the different viewfinder frames are distributed on a display interface; or the different viewfinder frames are distributed on different display interfaces on the display unit 702, and each display interface is used to display one viewfinder frame in full screen; or any one of the different viewfinder frames is displayed in full screen, and another viewfinder frame other than the viewfinder frame displayed in full screen in the different viewfinder frames hovers and is superimposed on the viewfinder frame displayed in full screen.

In a possible design, when receiving a shooting instruction of a user, and shooting, based on the shooting instruction, a to-be-shot image in at least one of the different viewfinder frames, the processing unit 703 is specifically configured to:
receive the shooting instruction of the user, and shoot, based on the shooting instruction, an image in at least one of the different viewfinder frames; and/or
receive the shooting instruction of the user, and sends, through the communication unit 701 based on the shooting instruction, a shooting control instruction to a second terminal device respectively corresponding to the at least one viewfinder frame, where the shooting control instruction indicates the second terminal device respectively corresponding to the at least one viewfinder frame to shoot a to-be-shot image in the at least one second viewfinder frame.

In a possible design, an adjustment function used for the to-be-shot images in the different viewfinder frames is the same as an adjustment function used for to-be-shot images displayed on displays of corresponding second terminal devices. The adjustment function includes any one or a combination of the following: a filter function, an effect function, a facial beautification function, and a wide-angle shooting function.

Based on a same invention concept, an embodiment of this application further provides a second terminal device. As shown in FIG. 8, the device 800 may include a shooting unit 801, a communication unit 802, a processing unit 803, and a display unit 804. The following describes the units in detail.

The shooting unit 801 is configured to capture a to-be-shot image.

The communication unit 802 is configured to send the to-be-shot image captured by the shooting unit 801 to a first terminal device.

The communication unit 802 is further configured to receive a shooting control instruction sent by the first terminal device.

The processing unit 803 is configured to perform image shooting by using the camera based on the shooting control instruction.

The display unit 804 is configured to display the to-be-shot image captured by the camera.

In a possible design, the communication unit 802 is further configured to: before sending the to-be-shot image captured by the camera to the first terminal device, connect the terminal device to the first terminal device. When connecting the terminal device to the first terminal device, the communication unit 802 is specifically configured to:
associate an ID number of the terminal device with an ID number of the first terminal device, or set an ID number of the terminal device and an ID number of the first terminal device to be the same.

Based on a same concept, FIG. 9 shows a terminal device 900 according to an embodiment of this application. The terminal device may perform the method in the foregoing embodiments and examples, and has a function of the first terminal device shown in FIG. 3A or FIG. 3B. Refer to FIG. 9. The terminal device 900 includes a transceiver 901, a display 902, a processor 903, and a memory 904.

The processor 903 is connected to the transceiver 901, the display 902, and the memory 904. Optionally, the processor 903, the transceiver 901, the display 902 and the memory 904 may be connected to each other through a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 9, but this does not mean that there is only one bus or only one type of bus.

Optionally, the terminal device may alternatively include a camera 905, or may not include a camera 905, and the processor 903 may capture an image of a current scene by using the camera 905 in the terminal device 900.

The transceiver 901 is configured to communicate and interact with another device. For example, when the terminal device 900 captures, by using an external shooting apparatus, the image that is of the current scene, the terminal device 900 obtains, through the transceiver 901, the image that is of the current scene and that is captured by the external shooting apparatus. Optionally, the transceiver 901 may be a Bluetooth module, a Wi-Fi module, an RF circuit, or the like.

The display 902 is configured to display a to-be-shot image captured by a camera.

The processor 903 is configured to implement the image shooting method provided in the embodiment and the example shown in FIG. 3A or FIG. 3B. For details, refer to the description in the foregoing embodiment. Details are not described herein again.

Optionally, the terminal device 900 may further include an audio circuit 906, configured to receive and send a voice signal.

The memory 904 is configured to store program instructions, data (for example, a reference model image of a makeup part), and the like. Specifically, the program instructions may include program code, and the program code includes computer operation instructions. The memory 904 may include a random access memory (random access memory, RAM), and may further include a non-volatile memory (non-volatile memory), for example, at least one magnetic disk memory. The processor 903 executes a program stored in the memory 904, and implements the foregoing functions by using the foregoing components, to finally implement the method provided in the foregoing embodiments.

Based on a same concept, FIG. 10 shows a terminal device 1000 according to an embodiment of this application. The terminal device may perform the method in the foregoing embodiments and examples, and has a function of the second terminal device shown in FIG. 3A or FIG. 3B. Refer to FIG. 10. The terminal device 1000 includes a transceiver 1001, a display 1002, a processor 1003, and a memory 1004.

The processor 1003 is connected to the transceiver 1001, the display 1002, and the memory 1004. Optionally, the processor 1002, the transceiver 1001, the display 1002 and the memory 1004 may be connected to each other through a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is for representing the bus in FIG. 10, but this does not mean that there is only one bus or only one type of bus.

Optionally, the terminal device may further include a camera 1005, and the processor 1003 may capture an image of a current scene by using the camera 1005 in the terminal device 1000.

The transceiver 1001 is configured to communicate and interact with another device. For example, when the terminal device 1000 captures, by using an external shooting apparatus, the image that is of the current scene, the terminal device 1000 obtains, through the transceiver 1001, the image that is of the current scene and that is captured by the external shooting apparatus. Optionally, the transceiver 1001 may be a Bluetooth module, a Wi-Fi module, an RF circuit, or the like.

The display 1002 is configured to display a shooting image captured by a camera.

The processor 1003 is configured to implement the image shooting method provided in the embodiment and the example shown in FIG. 3A or FIG. 3B. For details, refer to the description in the foregoing embodiment. Details are not described herein again.

Optionally, the terminal device 1000 may further include an audio circuit 1006, configured to receive and send a voice signal.

The memory 1004 is configured to store program instructions, data (for example, a reference model image of a makeup part), and the like. Specifically, the program instructions may include program code, and the program code includes computer operation instructions. The memory 1004 may include a random access memory (random access memory, RAM), or may further include a non-volatile memory (non-volatile memory), for example, at least one magnetic disk memory. The processor 1003 executes a program stored in the memory 1004, and implements the foregoing functions by using the foregoing components, to finally implement the method provided in the foregoing embodiments.

Based on the foregoing embodiments, an embodiment of this application further provides a computer program. When the computer program runs on a computer, the computer is enabled to perform the method provided in the foregoing embodiments.

Based on the foregoing embodiments, an embodiment of this application further provides a computer storage medium. The computer storage medium stores a computer program. When the computer program is executed by a computer, the computer is enabled to perform the method provided in the foregoing embodiments.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions related to a terminal device in the method provided in the foregoing embodiments. In a possible design, the chip system further includes a memory. The memory is configured to store a program and data that are necessary for the computer apparatus. The chip system may include a chip, or may include a chip and another discrete component.

In conclusion, in the image shooting method provided in embodiments of this application, the first terminal device obtains a to-be-shot image of a first camera of the first terminal device and/or a to-be-shot image of a second camera of the second terminal device. The first terminal device displays the to-be-shot image of the first camera in a first viewfinder frame on a display of the first terminal device, and/or displays the to-be-shot image of the second camera in a second viewfinder frame on a display of the first terminal device. The terminal device receives a shooting instruction of the user, and shoots, based on the shooting instruction, to-be-shot images in viewfinder frames corresponding to different terminal devices. In this method, to-be-shot images captured by cameras of different terminal devices are displayed on the display of the first terminal device by using different viewfinder frames. The first terminal device may flexibly control the cameras of different terminal devices to shoot an image in each viewfinder frame, to improve shooting experience of a user. In addition, in this solution, different viewfinder frames may be displayed in a full-screen manner or in a hovering and superimposing manner on a display of the first terminal device. In addition, the display of each second terminal device may display the to-be-shot image of the camera of each second terminal device by using a same adjustment function as that used by a corresponding viewfinder frame on the display of the first terminal device, for example, the filter/special effect/facial beautification function.

With descriptions of the foregoing implementations, a person skilled in the art may clearly understand that the embodiments of this application may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. This is used as an example but is not limited to: a computer readable medium such as a RAM, a ROM, an electrically erasable programmable read-only memory (electrically erasable programmable read-only memory, EEPROM), a compact disc read-only memory (compact disc read-only memory, CD-ROM) or another optical disk storage, a magnetic disk storage medium or another magnetic storage device, or any other medium that can be used to carry or store expected program code in a form of an instruction or a data structure and that can be accessed by a computer. In addition, any connection may be properly defined as a computer-readable medium. For example, if software is transmitted from a website, a server, or another remote source by using a coaxial cable, an optical fiber and optical cable, a twisted pair, a digital subscriber line (digital subscriber line, DSL), or wireless technologies such as infrared, radio, and microwave, the coaxial cable, the optical fiber and optical cable, the twisted pair, the DSL, or the wireless technologies such as infrared, radio, and microwave are included in a definition of a medium to which the coaxial cable, the optical fiber and optical cable, the twisted pair, the DSL, or the wireless technologies such as the infrared ray, the radio, and the microwave belong. As used in the embodiments of this application, a disk (disk) and a disc (disc) include a compact disc (compact disc, CD), a laser disc, an optical disc, a digital versatile disc (digital versatile disc, DVD), a floppy disk, and a Blu-ray disc, where the disk generally copies data magnetically, and the disc optically copies data by using a laser. The foregoing combination should also be included in the protection scope of the computer-readable medium.

In summary, the foregoing descriptions are merely embodiments of this application, and are not intended to limit the protection scope of this application. Any modification, equivalent replacement, and improvement made in accordance with the disclosure of this application shall be included in the protection scope of this application.

## Claims

1. An image shooting method, wherein the method comprises:
obtaining, by a first terminal device, a to-be-shot image captured by a first camera of the first terminal device and a to-be-shot image captured by a second camera of a second terminal device;
displaying, by the first terminal device in a first viewfinder frame on a display of the first terminal device, the to-be-shot image captured by the first camera, and displaying, in a second viewfinder frame on the display of the first terminal device, the to-be-shot image captured by the second camera; and
receiving, by the first terminal device, a shooting instruction of a user, and shooting images in the first viewfinder frame and the second viewfinder frame based on the shooting instruction.

2. The method according to claim 1, wherein before the obtaining, by a first terminal device, a to-be-shot image captured by a first camera of the first terminal device and a to-be-shot image captured by a second camera of a second terminal device, the method further comprises:
receiving, by the first terminal device, a first operation of the user, and associating an identity ID number of the first terminal device with an identity ID number of the second terminal device; or
receiving, by the first terminal device, a first operation of the user, and setting an identity ID number of the first terminal device to be the same as an identity ID number of the second terminal device.

3. The method according to claim 1, wherein the first viewfinder frame and the second viewfinder frame are distributed in parallel on the display of the first terminal device; or
the first viewfinder frame and the second viewfinder frame are distributed on different interfaces on the display of the first terminal device, and each interface is used to display one viewfinder frame in full screen; or
the first viewfinder frame hovers and is superimposed on the second viewfinder frame; or
the first viewfinder frame hovers and is superimposed under the second viewfinder frame.

4. The method according to claim 1, wherein the receiving, by the first terminal device, a shooting instruction of a user, and shooting images in the first viewfinder frame and the second viewfinder frame based on the shooting instruction comprises:
receiving, by the first terminal device, a first shooting instruction of the user, and shooting an image in the first viewfinder frame by using the first camera based on the first shooting instruction; and/or
receiving, by the first terminal device, a second shooting instruction of the user, and sending a shooting control instruction to the second terminal device based on the second shooting instruction, wherein the shooting control instruction indicates the second camera to shoot an image in the second viewfinder frame.

5. The method according to claim 1, wherein the method further comprises:
an adjustment function used for the to-be-shot image of the second camera in the second viewfinder frame is the same as an adjustment function used for the to-be-shot image that is of the second camera and that is displayed on a display of the second terminal device; and the adjustment function comprises any one or a combination of the following:
a filter function, an effect function, a facial beautification function, and a wide-angle shooting function.

6. An image shooting method, wherein the method comprises:
separately obtaining, by a first terminal device, a to-be-shot image captured by a second camera of at least one second terminal device;
separately displaying, by the first terminal device in at least one viewfinder frame on a display of the first terminal device, the to-be-shot image captured by the second camera of the at least one second terminal device, wherein different to-be-shot images are displayed in different viewfinder frames; and
receiving, by the first terminal device, a shooting instruction of a user, and shooting, based on the shooting instruction, a to-be-shot image in at least one of the different viewfinder frames.

7. The method according to claim 6, wherein before the separately obtaining, by a first terminal device, a to-be-shot image captured by a second camera of at least one second terminal device, the method further comprises:
receiving, by the first terminal device, a first operation of the user, and associating an identity ID number of the first terminal device with an identity ID number of the at least one second terminal device; or
receiving, by the first terminal device, a first operation of the user, and setting an identity ID number of the first terminal device to be the same as an identity ID number of the at least one second terminal device.

8. The method according to claim 6, wherein the different viewfinder frames are distributed on a display interface on the display of the first terminal device; or
the different viewfinder frames are distributed on different display interfaces on the display of the first terminal device, and each interface is used to display a viewfinder frame in full screen; or
any one of the different viewfinder frames is displayed in full screen on the display of the first terminal device, and another viewfinder frame other than the viewfinder frame displayed in full screen in the different viewfinder frames hovers and is superimposed on the viewfinder frame displayed in full screen.

9. The method according to claim 6, wherein the receiving, by the first terminal device, a shooting instruction of a user, and shooting, based on the shooting instruction, a to-be-shot image in at least one of the different viewfinder frames comprises:
receiving, by the first terminal device, the shooting instruction of the user, and shooting, by the first terminal device based on the shooting instruction, an image in the at least one of the different viewfinder frames; and/or
receiving, by the first terminal device, the shooting instruction of the user, and sending, based on the shooting instruction, a shooting control instruction to a second terminal device respectively corresponding to the at least one viewfinder frame, wherein the shooting control instruction indicates the second terminal device respectively corresponding to the at least one viewfinder frame to shoot a to-be-shot image in the at least one second viewfinder frame.

10. The method according to claim 8, wherein the method further comprises:
an adjustment function used for the to-be-shot images in the different viewfinder frames is the same as an adjustment function used for to-be-shot images displayed on displays of corresponding second terminal devices; and the adjustment function comprises any one or a combination of the following:
a filter function, an effect function, a facial beautification function, and a wide-angle shooting function.

11. An image shooting method, wherein the method comprises:
sending, by a second terminal device to a first terminal device, a to-be-shot image captured by a camera of the second terminal device, so that the to-be-shot image is displayed in a viewfinder frame on a display of the first terminal device; and
receiving, by the second terminal device, a shooting control instruction sent by the first terminal device, and shooting, based on the shooting control instruction by using the camera of the second terminal device, a to-be-shot image that is currently captured.

12. The method according to claim 11, wherein before the sending, by a second terminal device, a to-be-shot image captured by a camera of the second terminal device to a first terminal device, the method further comprises:
associating, by the second terminal device, an identity ID number of the second terminal device with an identity ID number of the first terminal device; or
setting an identity ID number of the second terminal device to be the same as an identity ID number of the first terminal device.

13. A first terminal device, comprising a first camera, a display, a memory, a processor, and a transceiver, wherein
the camera is configured to capture a to-be-shot image;
the transceiver is configured to obtain a to-be-shot image captured by a second camera of a second terminal device;
the display is configured to display an interface; and
the memory is configured to store one or more computer programs, and when the one or more computer programs are executed by the processor, the processor performs the method according to any one of claims 1 to 5.

14. A first terminal device, wherein the first terminal device comprises a display, a memory, a processor, and a transceiver, wherein
the display is configured to display an interface;
the transceiver is configured to obtain a to-be-shot image captured by a second camera of at least one second terminal device; and
the memory is configured to store one or more computer programs, and when the one or more computer programs are executed by the processor, the processor performs the method according to any one of claims 6 to 10.

15. A second terminal device, wherein the second terminal device comprises a camera, a display, a memory, a processor, and a transceiver, wherein
the camera is configured to capture a to-be-shot image;
the display displays the to-be-shot image captured by the camera;
the transceiver is configured to send the to-be-shot image captured by the camera to a first terminal device for display; and
the memory is configured to store one or more computer programs, and when the one or more computer programs are executed by the processor, the processor performs the method according to claim 11 or 12.

16. A computer storage medium, wherein the computer-readable storage medium comprises a computer program, and when the computer program runs on a first terminal device, the first terminal device is enabled to perform the method according to any one of claims 1 to 5 or the method according to any one of claims 6 to 10, or when the computer program runs on a second terminal device, the second terminal device is enabled to perform the method according to claim 11 or 12.

17. A graphical user interface on a terminal device, wherein the electronic device has a display, one or more memories, and one or more processors, and the one or more processors are configured to execute one or more computer programs stored in the one or more memories; the graphical user interface comprises a graphical user interface displayed when the electronic device performs the method according to any one of claims 1 to 5, or performs the method according to any one of claims 6 to 10, or performs the method according to claim 11 or 12.
